# EUROPEAN PATENT SPECIFICATION

(11) **EP 3 999 255 B1**
(45) Date of publication and mention of the grant of the patent: **18.02.2026**
(21) Application number: 20839893.3
(22) Date of filing: 15.07.2020
(51) Int. Cl.: G05D 1/226, G06Q 10/0631, G05B 19/04, A47L 11/40, B08B 13/00, G05D 1/648, G05D 1/698, G05D 109/10, G05D 105/10

(54) **SYSTEM FOR PERFORMING A DESIGNATED TASK**
SYSTEM ZUR DURCHFÜHRUNG EINER BESTIMMTEN AUFGABE
SYSTÈME POUR L'EXÉCUTION D'UNE TÂCHE DÉSIGNÉE

(30) Priority: 15.07.2019 SG 10201906555P
(43) Date of publication of application: 25.05.2022
(73) Proprietor: Lionsbot International Pte. Ltd., Singapore 486122 (SG)
(72) Inventor: NG, Dylan, Terntzer, Changi South Street 3, 03-02, Singapore 486122 (SG); ELARA, Mohan Rajesh, Changi South Street 3, 03-02, Singapore 486122 (SG); PATHMAKUMAR, Thejus, Changi South Street 3, 03-02, Singapore 486122 (SG); TAY, Sunardi, Changi South Street 3, 03-02, Singapore 486122 (SG)
(74) Representative: Bardehle Pagenberg Partnerschaft mbB Patentanwälte Rechtsanwälte
(86) International application number: PCT/SG2020/050409
(87) International publication number: WO 2021/010899

(56) References cited:
- WO-A1-2019/124913
- CN-A- 107 981 788
- US-A1- 2011 082 717
- US-A1- 2012 165 978
- US-A1- 2016 342 157
- US-A1- 2018 157 266
- US-A1- 2018 300 676
- US-A1- 2018 361 577
- ANONYMOUS: "What Is Two-Factor Authentication (2FA)? - Authy", 14 July 2019 (2019-07-14), https://authy.com/what-is-2fa/, XP093095444, Retrieved from the Internet <URL:https://web.archive.org/web/20190714234023/https://authy.com/what-is-2fa/> [retrieved on 20231026]

## Description

### FIELD OF THE INVENTION

The present disclosure relates to a system for performing a designated task using a plurality of task-specific apparatus.

### BACKGROUND ART

The following discussion of the background to the disclosure is intended to facilitate an understanding of the present disclosure only. It should be appreciated that the discussion is not an acknowledgement or admission that any of the material referred to was published, known or part of the common general knowledge of the person skilled in the art in any jurisdiction as at the priority date of the disclosure.

Cleaning typically requires a combination of tasks to be executed in a coordinated manner. For example, the procedure for cleaning an office space may involves the following tasks:- collection of garbage from trash can and dust bins; re-arrangement of furniture facilitating the cleaning; sweeping the floor to remove dust and derbies; vacuuming the floor; wet clean the floor with scrubbing; arrange the furniture back in place; and/or cleaning the table. To ensure cleaning efficiency and effectiveness, the sequential order of execution of the different cleaning tasks is sometimes crucial.

Presently, there are different kinds of autonomous cleaning machines that does different cleaning tasks, such as automated floor scrubbing, floor vacuuming, sweeping, mopping and etc. However, most of the commercially available cleaning machines perform one task at a time. Only a few cleaning machines can perform more than one cleaning action during operations. For instance, a pavement sweeper can perform sweeping of the pavement and removing the dust using suction, and an auto-scrubber machine can perform both scrubbing and vacuuming of the floor. The cleaning actions that one cleaning machine can perform are limited, and may not be sufficient for cleaning a relatively large and complex area, e.g. an office area. In some cases, involvement of a human cleaner is necessary to perform a task that the cleaning machine is not capable of.

In other cases, multiple cleaning machines are deployed for performing different cleaning actions. However, in existing systems, the multiple cleaning machines are not capable of carrying out the cleaning actions in a coordinated and automated manner, and human intervention during the cleaning process may still be required.

Document US 2018/0300676 A1 discloses a delivery robot and a method of operation. The method of delivery robot operation, preferably including: navigating the robot to a location of a user; authenticating the user; initiating a transaction with the user; determining a user interaction with a compartment of the robot; and determining a termination event.

Document US 2012/0165978 A1 A cloud server and method controls one or more robots. The cloud server receives location information of each robot. A robot closest to a task location where a task is taken according to the location information. The cloud server of the data center sends a command to the located robot to move to the task location, where the command defines a task of the located robot to perform.

Document "What Is Two-Factor Authentication (2FA)?", 14 July 2019, XP093095444, Retrieved from the Internet: URL:https://web.archive.org/web/2019071 4234023/https ://authy.com/what-is-2fa/ discloses the concept of two-factor authentication for online accounts.

Document US 2011/0082717 A1 discloses a system for hierarchical mission management comprising a number of mission planners, a data processing system, and a communication system. The number of mission planners are associated with a number of agent groups. The data processing system is configured to execute the number of mission planners. The communication system is configured to provide communication between the number of mission planners.

Document US 2018/0361577 A1 discloses a robotic device comprising a propulsion mechanism, an orientation sensor, a stored digital map of a service area, a sensor for sensing objects, a navigation and orientation system, and a processing facility comprising a processor and a memory. The processing facility causing the robotic device to determine and store a pose position of the robotic device at a plurality of sequential locations as the robotic device is guided by a user along a path from a start location to an end location through the service area. As commanded by the user and utilizing the navigation and orientation system the device re-traces the path from the start location to the end location replicating the stored pose position of the robotic device at the plurality of sequential locations.

In view of the above, there exists a need for a better solution to alleviate at least one of the aforementioned problems at least through providing a system and apparatus capable of automated and cooperative cleaning.

### SUMMARY

The invention is set out in the appended set of claims.

In accordance to one aspect of the present disclosure there is system for performing a designated cleaning task. The system comprises: - a plurality of cleaning apparatus, each cleaning apparatus is capable of performing at least one cleaning action, at least one of the plurality of cleaning apparatus is configured to communicate with a processor unit, wherein the processor unit comprises: - a hierarchy generation module for determining a hierarchy state for each of the cleaning apparatus, the hierarchy state is generated based on at least a robot information received from the corresponding cleaning apparatus; a task planning module for generating a cleaning operation plan based on at least the hierarchy state assigned to the plurality of cleaning apparatus and the designated cleaning task; and a task execution module for transmitting a command to each of the cleaning apparatus to execute the designated cleaning task according to the cleaning operation plan.

In some embodiments, each of the plurality of cleaning apparatus is capable of performing one or more of the following cleaning actions: sweeping, vacuuming, scrubbing, mopping, window cleaning, table cleaning garbage collecting, arrangement of furniture for facilitating cleaning.

In some embodiments, the processor unit the processor unit further comprises a robot registration module for selectively registering two or more cleaning apparatus for the designated cleaning task.

In some embodiments, the processor unit comprises at least one cloud server.

In some embodiments, the cleaning operation plan comprises one or more cleaning operation layers.

In some embodiments, the cleaning operation plan defines one or more cleaning zones within a designated cleaning area.

In some embodiments, the system further comprises further comprising a user device arranged in data communication with the processor unit and configured to receive one or more user defined parameters in relation to the designated cleaning task.

In some embodiments, the task planning module is configured to determine the cleaning operation plan based on the one or more user defined parameters received from the user device.

In some embodiments, the one or more user defined parameters comprise one or more of the following: - one or more designated cleaning tasks, geographical information of one or more designated cleaning area, infrastructure or environmental information of the one or more designated cleaning area, priority information of the one or more designated cleaning tasks, priority information of the one or more designated cleaning areas, and information of a user.

In some embodiments, the processor unit further comprises: a control manager for generating a high-level control command for the plurality of cleaning apparatus based on one or more instructions received from the user device; and an action generator for generating an device-specific control command for each of the plurality of cleaning apparatus from the high-level control command, wherein the processor unit is configured to transmit the device-specific control command to the corresponding cleaning apparatus for execution.

In accordance another aspect of the disclosure there is a cleaning apparatus for use with a cooperative cleaning system, comprising:- a cleaning module capable of performing one or more cleaning actions, and a communication module configured to communicate with a processor unit of the cooperative cleaning system, wherein the processor unit comprises:- a hierarchy generation module for determining a hierarchy state for the cleaning apparatus and for one or more other cleaning apparatus selected for a designated cleaning task, the hierarchy state is generated based on at least a robot information received from the corresponding cleaning apparatus; a task planning module for generating a cleaning operation plan based on at least the hierarchy state of the cleaning apparatus and hierarchy states of the one or more other cleaning apparatus; and a task execution module for transmitting a command to the cleaning apparatus and to the one or more other registered cleaning apparatus to execute the designated cleaning task according to the cleaning operation plan.

In some embodiments, the processor unit comprises a robot registration module for selecting and registering the cleaning apparatus and the one or more other cleaning apparatus for the designated cleaning task.

In some embodiments, the processor unit comprises at least one cloud server.

In some embodiments, the cleaning apparatus is configured to communicate with the one or more other registered cleaning apparatus.

In some embodiments, the cleaning apparatus is capable of performing one or more of the following cleaning actions: sweeping, vacuuming, scrubbing, mopping, window cleaning, table cleaning garbage collecting, arrangement of furniture for facilitating cleaning.

In some embodiments, the cleaning operation plan comprises one or more cleaning operation layers.

In some embodiments, the cleaning operation plan defines one or more cleaning zones within a designated cleaning area.

In some embodiments, the processor unit is operable to be in data communication with a user device.

In some embodiments, the task planning module is configured to determine the cleaning operation plan based on one or more user defined parameters received from the user device.

In some embodiments, the one or more user defined parameters comprise one or more of the following: - one or more designated cleaning tasks, geographical information of one or more designated cleaning area, infrastructure or environmental information of the one or more designated cleaning area, priority information of the one or more designated cleaning tasks, priority information of the one or more designated cleaning areas, and information of a user.

In some embodiments, the cleaning apparatus comprises one or more perception sensors for measuring parameters in relation to an external environment and/or in relation to an operational state of the cleaning apparatus.

In accordance to another aspect of the disclosure, there is a system for performing a designated task, comprising:- a plurality of task-specific apparatus, at least one of the plurality of task-specific apparatus is configured to communicate with a processor unit; and a user device configured to receive one or more instructions from a user and configured to communicate with the processor unit, wherein the processor unit comprises:- a control manager for generating a high-level control command based on the one or more instructions received from the user device; and an action generator for generating a device-specific control command for each of the plurality of apparatus from the high-level control command, wherein the processor unit is configured to transmit the device-specific control command to the corresponding apparatus for execution.

In some embodiments, the processor unit further comprises an authentication manager for processing and authenticating a robot information received from the plurality of task-specific apparatus.

In some embodiments, the authentication of the robot information comprises a two-factor authentication.

In some embodiments, the processor unit further comprises a data clustering unit for managing the inflow and outflow of data between the processor unit and the plurality of task-specific apparatus.

In some embodiments, the plurality of task specific apparatus comprises one or more cleaning apparatus, each cleaning apparatus is capable of performing one or more of the following cleaning actions: sweeping, vacuuming, scrubbing, mopping, window cleaning, table cleaning garbage collecting, arrangement of furniture for facilitating cleaning.

In some embodiments, the processor unit further comprises: - a hierarchy generation module for determining a hierarchy state for each cleaning apparatus, the hierarchy state is generated based on at least the robot information received from the corresponding cleaning apparatus; and a task planning module for generating a cleaning operation plan based on at least the hierarchy state assigned to the plurality of cleaning apparatus and the designated cleaning task.

In some embodiments, the processor unit comprises at least a cloud server.

In some embodiments, the system is configured to track and record activities of the plurality of task-specific apparatus and/or of the user.

Other aspects of the disclosure will be apparent to those of ordinary skill in the art upon review of the following description of specific embodiments of the disclosure in conjunction with the accompanying drawings.

### BRIEF DESCRIPTION OF THE DRAWINGS

Various embodiments are described, by way of example only, with reference to the accompanying drawings, in which:
Figure 1 illustrates a cooperative cleaning system for operating a team of robots according to one embodiment of the present disclosure;
Figure 2 illustrates a functional block diagram of a processor unit of the cooperative cleaning system in Figure 1, which may be in the form of a cloud server according to one embodiment;
Figure 3 illustrates a hardware architecture of a robot in Figure 1, which may be in the form of an autonomous robot for use with the cooperative cleaning system according to one embodiment;
Figure 4 illustrates a multilayer cleaning strategy plan generated by a task planning module of the processor unit in Figure 2;
Figure 5 illustrates task execution by a plurality of robots based on the multilayer cleaning strategy plan of Figure 4;
Figure 6 illustrates the cooperative cleaning system of Figure 1 being capable of further providing different micro-services according to one embodiment of the present disclosure;
Figure 7 illustrates the cooperative cleaning system of Figure 1 being capable of teleoperation according to another embodiment of the present disclosure;
Figure 8 illustrates a sequence of steps implemented on a user device for operating the cooperative cleaning system in Figure 7;
Figure 9 illustrates a user registration process on the user device;
Figures 10 and 11 illustrate user interface screens of a mobile application installed on the user device for user registration;
Figure 12 illustrates a robot registration process on the user device;
Figure 13A and 13B illustrate user interface screens of the mobile application for robot registration and control;
Figure 14 illustrates a cooperative cleaning system for operating a team of robots according to another embodiment of the present disclosure;
Figures 15A and 15B illustrate user interface screens of a mobile application for operating the cooperative cleaning system in Figure 14.

### DETAILED DESCRIPTION

Throughout this specification, unless otherwise indicated to the contrary, the terms 'comprising', 'consisting of, 'having' and the like, are to be construed as non-exhaustive, or in other words, as meaning 'including, but not limited to'.

Throughout the specification, unless the context requires otherwise, the word 'include' or variations such as 'includes' or 'including' will be understood to imply the inclusion of a stated integer or group of integers but not the exclusion of any other integer or group of integers.

Unless defined otherwise, all other technical and scientific terms used herein have the same meaning as is commonly understood by a skilled person to which the subject matter herein belongs.

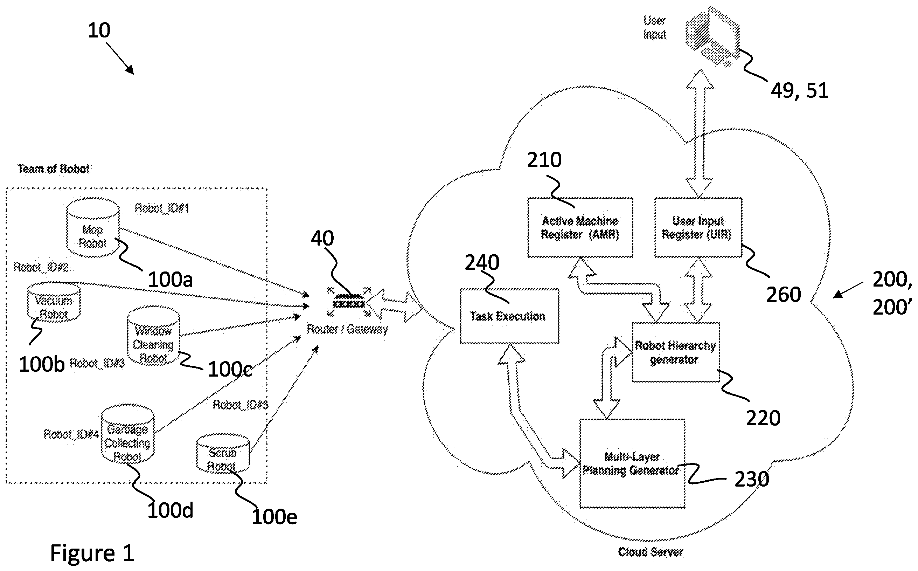

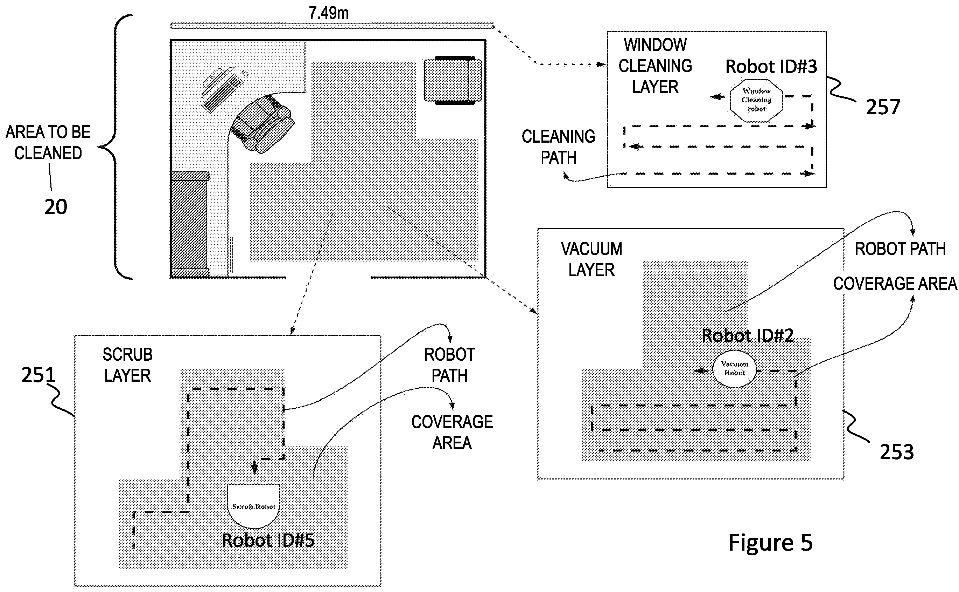

In accordance with various embodiments of the invention and with reference to Figure 1 to 5, there is system 10 for performing a designed cleaning task (for example, cleaning an office area 20 as shown in Figure 5) with a team of cleaning apparatus 100. The system comprises a plurality of cleaning apparatus 100, each cleaning apparatus 100 is capable of performing at least one cleaning action and the plurality of cleaning apparatus 100 are configured to communicatively connect or communicate with a processor unit 200. The processor unit 200 comprises a hierarchy generating module 220 for determining a hierarchy state of each of the cleaning apparatus 100 according to a robot information of the cleaning apparatus 100. The processor unit 200 also includes a task planning module 230 for generating a cleaning operation plan based on at least the hierarchy state assigned to each of the cleaning apparatus 100 and the designated cleaning task. The processor unit further includes a task execution module 240 for transmitting a command to the corresponding cleaning apparatus 100 to operate the cleaning apparatus 100 according to the cleaning operation plan. The step of 'determining a hierarchy state' may include one or more steps of assigning, calculating and deriving. The system 10 is capable of performing cooperative cleaning using multiple cleaning apparatus 100, and is also referred to as a cooperative cleaning system 10.

In various embodiments, each of the plurality of the cleaning apparatus 100 is a robot 100 configured to perform one or more of the following cleaning actions: sweeping, vacuuming, scrubbing, mopping, window cleaning, table cleaning, and garbage collecting. In some embodiments, the plurality of cleaning apparatus 100 may also comprise a robot configured to assist one or more other cleaning apparatus 100 to perform the aforementioned cleaning actions. For example, the cleaning apparatus 100 may be a robot configured to arrange furniture in the designated cleaning area for facilitating cleaning or a robot configured to remove an obstacle for another cleaning apparatus 100. Hereinafter, the cleaning apparatus 100 may also be referred to as a cleaning robot 100 or simply a robot 100.

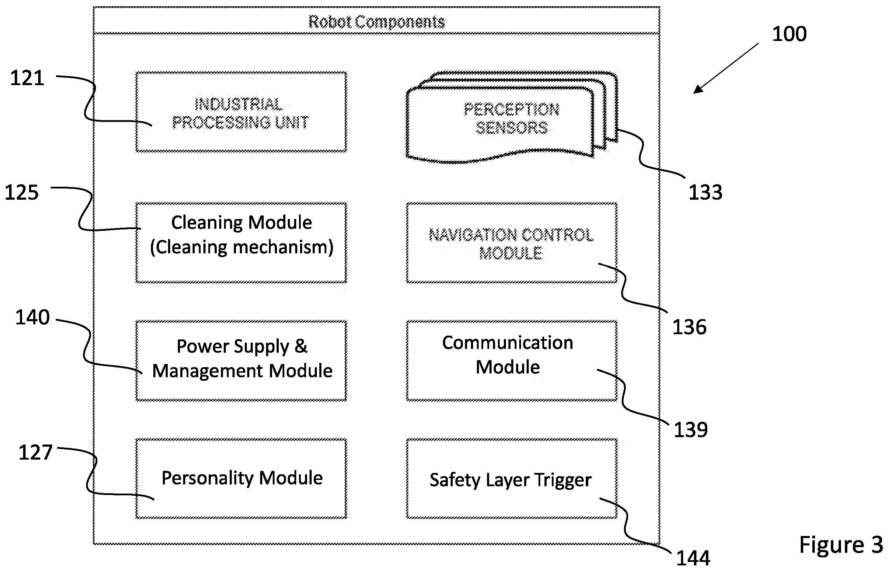

The components of the cleaning apparatus 100 or the cleaning robot 100 are illustrated in Figure 3.

In various embodiments, the cleaning apparatus 100 comprises a controller module 121 and a cleaning module 125 controlled by the controller module 121 to perform one or more cleaning actions as described above, a power supply module 140 for supplying and managing electrical power to electrical components of the cleaning apparatus 100, a navigation module 136 for moving the cleaning apparatus 100 in an intended direction and/or to a pre-determined location, and a communication module 139 for receiving and/or transmitting data from/to a processor unit 200 of the cooperative cleaning system. Based on the cleaning action that a particular cleaning apparatus 100 is capable of, the cleaning apparatus 100 can be referred to as sweeping robot (not shown), a vacuum robot 100b, a scrub robot 100e, a mop robot 100a, a window cleaning robot 100c, a table cleaning robot (not shown), a garbage collecting robot 100d, and/or a cleaning assistant robot (not shown). The cleaning apparatus 100 can be fully autonomous (i.e. capable of navigation and operation without human control) or semi-autonomous (i.e. capable of navigation and operation to some extent without human control).

In various embodiments, the cleaning module 125 may comprise a cleaning tool configured to perform a specific cleaning action, a motor for driving the cleaning tool. For example, the cleaning module 125 of a scrub robot 100e may comprise one or more brushes installed at lower part of the robot 100e, a motor for driving the one or more brushes and adjusting a rotation speed of the brushes. It is appreciable that the cleaning module 125 may be adapted to perform different cleaning actions (such as scrubbing, sweeping, mopping etc.)

In various embodiments, the navigation module 136 may comprise a traction motor for propulsion of the cleaning apparatus 100 on wheels, and a motor driver for driving the traction motor. The motor driver receives commands from the controller module 121 and drive the traction motor to move at a specified speed and/or in a specified direction. The navigation module allows the cleaning apparatus 100 to be deployed in motion for executing the cleaning task. The cleaning apparatus 100 may move to a first cleaning area for executing a first cleaning task, and thereafter to a second cleaning area for executing a second cleaning task. The cleaning apparatus 100 may also be controlled to move from a first location/zone to a second location/zone within a designated cleaning area. For example, a sweep robot 100 may be controlled to move around inside a room/an office along a pre-determined robot path to clean the office floor.

In various embodiments, the communication module 139 is configured to allow the cleaning apparatus 100 to be in data communication with the processor unit 200 of the cooperative cleaning system 10. In some embodiments, the communication module 139 is configured to connect to a network interface through which processor unit 200 of the cooperative cleaning system may be accessed. It is appreciable that the data communication may be achieved using different communication protocols including, but not limited to 4G, Wi-Fi^{™}, and Bluetooth^{™} wireless communication protocols. In some embodiments, one or more wireless/wired network routers 40 may be used to establish a communication link between the plurality of cleaning apparatus 100 and a distant server 200, as shown in Figure 1.

In various embodiments, the communication module 139 may be further configured to put the cleaning apparatus 100 in data communication in one or more other cleaning apparatus 100. In other words, the cleaning apparatus may be capable of both robot-to-system communication and robot-to-robot communication. Robot-to-robot communication may facilitate information sharing among the plurality of cleaning apparatus. For example, an emergency stop message may be transmitted directly from one cleaning apparatus 100 to another cleaning apparatus 100 instead of being re-routed via the processor unit 200 of the system 10 which would reduce the response time for emergency braking. In some embodiments, the navigation and operation instructions may be transmitted to one cleaning apparatus 100 from the processor unit 200 which would then relay the navigation and operation instructions to each of the remaining cleaning apparatus 100 individually through the robot-to-robot communication.

In some embodiments, the power supply module 140 may comprise a battery unit with one or more primary/disposable batteries, or one or more secondary/chargeable batteries. The power supply module 140 may comprise a power control circuit configured to regulate the electrical power to the various electrical components of the cleaning apparatus 100 for proper operation, and to detect a battery level of the power supply module 140. In relation to embodiments where chargeable batteries are used, the power supply module 140 may further comprise a charger circuit which allows the batteries to be connected to an external electric power source for charging when the battery level of the cleaning apparatus 100 is low. As the cleaning apparatus 100 may operate on portable batteries, the movement of the cleaning apparatus 100 is not restricted by the requirement of a power cable and/or by the length of the power cable.

In various embodiments, the power supply module 140 may comprise a battery management system (BMS) configured to manage the battery unit. The battery management system may be implemented in centralized manner, a distributed manner, or a modular manner, and is configured to monitor the state of the battery unit by measuring various operating parameters of the battery unit, such as voltage, temperature, state of charge (SOC), state of health (SOH), state of safety (SOS), coolant flow, current in or out of the battery unit, and etc. In some embodiments, the battery management system is also configured to calculate secondary data (e.g. charge and discharge current limit, energy delivered since last charge cycle, internal impedance of a battery cell for determining an open circuit voltage). The secondary data may be communicated internally with other components of the cleaning apparatus 100 (e.g. transmitted to the controller module 121), or may be communicated/transmitted to an external system such as a user device 49.

Advantageously, the battery management system may protect the battery unit from operating outside its safe operating range (e.g. over-current, over-voltage during charging or under-voltage during discharging, over-temperature or under-temperature, ground fault or leakage of current). For example, the battery management system may include an internal switch (such as a relay or solid state device) which is opened if the battery is operated outside its safe operating range. Additionally or alternatively, the battery management may request the various components of the cleaning apparatus to reduce or terminate using the battery and/or actively control the operating environment, so that operation outside the battery unit's safe operating range may be prevented. In various embodiments, the cleaning apparatus 100 comprises one or more perception sensors 133.

In various embodiments, the perception sensors 133 may include one or more exteroceptive sensors for external perception and mapping. More specifically, the exteroceptive sensors are configured to measure various values in relation to the external environment and/or objects in the environment. The non-limiting examples of the exteroceptive sensors include two dimensional distance measurement sensors, three dimensional distance measurement sensors, infrared distance sensors, ultra-sound distance and obstacle sensors, cliff detection sensors, IR sensitive sensors, thermal sensors, tactile sensors, Global Positioning System (GPS), Ground Penetrating Radar (GPR), lasers for object detection and range sensing, inertial sensors, imaging devices such as a video camera. The sensor inputs from various sensors are processed into meaningful, actionable perceptions, based on which the cleaning apparatus may change/adjust its operational state or behavior.

In various embodiments, the controller module 121 is operable to control the operation of the cleaning apparatus 100 based on its perceptions/the values received from the perception sensors 133. For example, the cleaning apparatus 100 may be controlled to navigate around an object/obstacle or to stop when a human or a cliff is detected.

In various embodiments, the perception sensors 139 on the plurality of cleaning apparatus sensors forms an on-board positioning and mapping system, particularly by way of using multiple distance sensors, GPS systems, obstacles sensors. For the cleaning apparatus 100 to travel to a destination or to execute a particular cleaning task, the perception sensors may collect environmental/geographical information (e.g. the distance to travel, the objects/obstacles in the cleaning area) for the embedded computing system to calculate an optimized navigation path.

In some embodiments, the perception sensors 133 may also include one or more proprioceptive sensors. The proprioceptive sensors are configured to measure values internal to the robot system, e.g. pose and heading information, odometry information, or information about the operational state of the cleaning apparatus (such as battery level, wheel position, joint angle, etc). Non-limiting examples of the proprioceptive sensors include encoders, potentiometers, inertia sensors such as accelerometers and gyroscopes, compasses, etc.

In various embodiments, the plurality of cleaning apparatus 100 for use with the cooperative cleaning system 10 may be equipped with different types of perception sensors 133 on different cleaning apparatus 100. It is appreciable that values detected from perception sensors 133 from the different cleaning apparatus 100 may be combined into a perception information which may be used by the system to control cleaning apparatus 100 and/or to generate the cleaning operation plans for the cleaning apparatus 100.

In some embodiments, the cleaning apparatus 100 may comprise a personality module 127 configured to adjust the behavior of the cleaning apparatus 100 according to a state of the apparatus, for example, a location of the cleaning apparatus 100, a current state of operation of the cleaning apparatus 100, a current power consumption of the cleaning apparatus 100, and other states which may be either a state detected by the perception sensors 133 of the cleaning apparatus 100, or a user-defined state. Further, the personality module on the cleaning apparatus may be configured to receive commands from a personality generator embedded at the processor unit 200 of the system 100, which determines a personality (i.e. the robot behavior) of a particular cleaning apparatus 100.

Advantageously, the cleaning apparatus 100 equipped with complex computational system together with advanced sensor suite allows complete perception and understanding of its internal cleaning states as well as its external surroundings for autonomous cleaning and navigation. As illustrated in the robot hardware architecture in Figure 3, the cleaning apparatus 100 is able to process all internal status, and all operational activities it has performed can be properly managed and uploaded to the processor unit 200. In some embodiments, the cleaning apparatus 100 may further comprise a safety layer trigger module 144, which may be configured to automatically shut down the cleaning apparatus 100 or activate an alert system to send an alert (e.g. an alerting sound, a alerting message) in case of an emergency. It is appreciable that other functional modules may be incorporated or embedded in the cleaning apparatus 100, for example, a display module for displaying information about the cleaning apparatus 100 to a user, a control panel for controlling the operation of the cleaning apparatus 100, an audio unit (e.g. a speaker or buzzer) for communicating an audio message to the user (e.g. an audio alarm in case of robot mal-function, low battery level, and/or emergency stop)..

The cleaning apparatus 100 has a printed tag with a QR code or a bar code that is adhered to a body of the robot 100. The robot details (such as type of robot, and a robot identification information) are stored in a bar code or a QR code system. In some embodiments, the cleaning apparatus 100 is configured to display the robot details and display a QR code or a bar code having the robot details stored therein.

In some embodiments, the plurality of cleaning apparatus 100 of the cooperative cleaning system 10 is a team comprising different types of cleaning apparatus 100. For example, as illustrated in Figure 1, the plurality of cleaning apparatus 100 may comprise a mop robot 100a, a vacuum robot 100b, a window cleaning robot 100c, a garbage collecting robot 100d, and a scrub robot 100e. It is appreciable that the plurality of cleaning apparatus 100 of the cooperative cleaning system 10 may comprise other types of cleaning apparatus 100 depending on requirements such as the designated cleaning area and the cleaning task to be performed. When a designated cleaning task is relatively complex (e.g. to clean an entire office area), the different types of cleaning apparatus used in the cooperative cleaning system may work together to provide a holistic and more efficient machine cleaning solution. The cooperative cleaning system 10 of the present disclosure is capable of a higher level of automation, and requirement of human involvement may be reduced.

The cleaning apparatus 100 may be classified into different families based on types of cleaning areas such as, but not limited to, a floor area, a window area and a staircase area. For example, the mop robot 100a, the vacuum robot 100b, the garbage collecting robot 100d and the scrub robot 100e may be classified as belonging to a family of floor cleaning robots. And the window cleaning robot 100c will be classified as belonging to a family of window cleaning robots. The different families of robots use or are assigned different maps. During use, the floor cleaning robots cleaning a particular floor area will share a floor map of that particular floor area. Likewise, window cleaning robots cleaning a particular window area will share a window map of that particular window area. Similarly, other robots (not shown) for cleaning a staircase area will be classified as belonging to a family of staircase cleaning robots.

In various embodiments, the cleaning apparatus 100 is configured to transmit data signals with regards to a robot information to the processor unit 200 once the communication link is established. The robot information may include, but is not limited to geographical information of the cleaning apparatus 100, a current operational state of the cleaning apparatus 100, and a current power consumption status, battery management data, hours of operation, health status, error status, characteristics of working environment (which may comprise exteroceptive and proprioceptive sensor data), and fault-diagnostic information. The geographical information of the cleaning apparatus 100 may include, but not limited to, three-dimensional coordinates, a country, a city in a particular county, a residential address, based on which the location of cleaning apparatus 100 may be determined.

It is to be appreciated that data with regard to the plurality of cleaning apparatus 100 can be transmitted to the processor unit 200 by using an identification, an authentication, an encryption, and decryption. During authentication, the cleaning apparatus 100 may generate a signal that is to be sent to the processor unit 200 for an establishment of a full duplex communication. The signal is encrypted through a key generation processes and sent to a receiver end. Then at the receiver end, decryption of the signal is done and the two-way handshake is performed. In the event of successful two-way handshake process, the full duplex communication between the apparatus 100 and processor unit 200 is established.

In various embodiments, the processor unit 200 is arranged in data communication with the plurality of cleaning apparatus 100. The processor unit 200 may be a computing system or a computing environment through which the cooperative cleaning system 10 may be implemented. Particularly, the processor unit 200 is configured to manage the incoming and outgoing robot information in one or more databases and provide a platform to run algorithms at the back end of the system 10.

In various embodiments, the processor unit 200 may be implemented on one or more computing devices (e.g. computers, mobile computing devices), one or more servers having one or more memory resources or arranged in communication with one or more memory resources. The servers may include physical computer servers and virtual servers such as cloud servers. The computing device(s) and server(s) may include hardware components such as microprocessors or processor circuits implemented in the form of integrated circuits (IC) chips, such as, an Application Specific Integrated Circuit or ASIC) which may be installed/embedded on various apparatus and devices of the cooperative cleaning system 10. As an addition or alternative to these implementations, some of the subsystems of the processor unit 200 can also be implemented on one or more user devices or control devices, such as through applications that operate on the user device or control device.

In some embodiments, the processor unit 200 comprises different functional modules/blocks. It is appreciable that the different functional modules/blocks may be provided in one computing device/database server/microprocessor, or may be distributed among more than one database servers forming the processor unit 200.

In some embodiments, the processor unit 200 comprises at least one cloud server 200', a virtual server running in a cloud computing environment. As a non-limiting example, a cooperative cleaning system 10 implemented on a cloud server 200', and having different functional modules of the cloud server is illustrated in Figure 1 to 5 and will be elaborated in details.

In various embodiments, the cloud server 200' comprises a robot registration module 210 configured to receive, store and process the robot information received from the plurality of cleaning apparatus 100. Each cleaning apparatus 100 of the system 10 possess a unique ID, which may be stored in a Robot_ID field of a database of the cloud server 200'. The cleaning apparatus 100 that are currently available in a particular location will register its Robot_ID in the cloud server 200'. For example, when a total number of seven cleaning apparatus 100 are deployed in an office, among which five are available, the IDs of the five available robots will be registered in the cloud server 200'. In some embodiments, a database server (known as an Active Machine Register or an "AMR") located at the cloud end will maintain the Robot_IDs of all available cleaning apparatus 100 connected to the cloud server 200'. The cluster of robots 100 having available status will be considered further for a designated cleaning task. Robots that are turned off or involved in a cleaning operation will be unavailable.

In some embodiments, the robot registration module 210 of the cloud sever 210 may be configured to selectively register two or more of the plurality of cleaning apparatus 100 for a designated cleaning task. Selection of cleaning apparatus 100 will be described later. The selection of the cleaning apparatus 100 may be based on the type of cleaning apparatus 100 required for the designated cleaning task, and the robot information received from available cleaning apparatus 100 as described above. For example, as shown in Figure 1, five available cleaning apparatus 100 are in data communication with the cloud server 200' and are respectively registered as ROBOT_ID#1, ROBOT_ID#2, ROBOT_ID#3, ROBOT_ID#4, ROBOT_ID#5 in the robot registration module 210 or the AMR of the cloud server 200'. As shown in Figure 5, to clean a floor area and a window area in an office 20, three of the five available cleaning apparatus 100, i.e. a vacuum robot (ROBOT_ID#2), a window cleaning robot (ROBOT_ID#3), and a scrub robot (ROBOT_ID#5), are selected and registered in the robot registration module 210 for execution of this cleaning task.

In various embodiments, robot information (including the Robot_ID and other necessary information) of the cleaning apparatus 100 registered for cleaning task execution is transmitted from the robot registration module 210 to a hierarchy generation module 220. This particular functional module 220 is configured to determine or define a hierarchy state for each of the registered cleaning apparatus 100, which may be stored as an electronic record labelled as 'HierachRank' field in a database arranged in data communication with or as part of the cloud server 200'. The hierarchy state relates to the operation sequence of different cleaning apparatus 100 selected for cleaning task execution.

In various embodiments, the hierarchy generation module 220 is configured to determine the hierarchy state of a particular cleaning apparatus 100 based on the robot information (or one or more robot characteristics), and/or an infrastructure or environmental information of the designated cleaning area. The robot information includes the type of cleaning apparatus, the operational state, and the power consumption of the registered cleaning apparatus 100, and other information as described above. The infrastructure or environmental information includes, but is not limited to the following parameters: - type of floor surface in the designated cleaning area, furniture density in the designated cleaning area, and the required cleaning area coverage.

In various embodiments, different Operation Research (OR) optimization and/or scheduling techniques may be adopted by the hierarchy generation module 220 for deciding the robot hierarchy state. For example, an allocation model based on a linear or a non-linear programming technique may be implemented by the hierarchy generation module 220 to assign the hierarchy state to the different cleaning apparatus 100 in such a manner that one or more measures of cleaning effectiveness and/or efficiency may be optimized.

In some embodiments, the robot information/characteristics may be a top most priority for the robot hierarchy generation. Taking the embodiment of Figure 5 as an example, for a team of robots 100 including a vacuum robot 100b, a window cleaning robot 100b and scrub robot 100e, the hierarchy generation module 220 may rank the scrub robot 100e as number one (i.e. HierachRank=1), the vacuum robot 100b as number two (i.e. HierachRank=2) and the window cleaning robot 100b as number three (i.e. HierachRank=3) as long as they are working in a normal office space.

It is appreciable that the hierarchy generation module 220 may be configured or programmed to determine the hierarchy state based on other relevant factors to further optimize the operational efficiency of the corporative cleaning system 10, and other suitable Operation Research techniques may be used for robot hierarchy generation and cleaning process optimization.

In various embodiments, the cooperative cleaning system 10 comprises a task planning module 230 as part of the cloud server 200' for generating a cleaning operation plan for each of the registered cleaning apparatus 100, based on at least the hierarchy state and the designated cleaning task. The cleaning operation plan comprise a plurality of operational protocols for the cleaning apparatus to follow to execute the cleaning task. For example, the cleaning operation plan may define an operation sequence/order among the multiple registered cleaning apparatus 100, as well as various operation parameters (such as an operation time period, a coverage area, and a robot navigation path) for each of the registered cleaning apparatus 100. For example, for a scrub robot 100e, the cleaning operation plan will have the information of the path it has to follow, a brushing pressure it has to apply on the floor, a profile of suction, etc., as shown in Figure 5.

In various embodiments, a multi-layer cleaning strategy is adopted by the task planning module 230 to generate the cleaning operation plan. In other words, the cleaning operation plan comprises multiple layers of cleaning operation, or multiple cleaning operation layers. Each cleaning operation layer corresponds to a time period, during which one cleaning action (e.g. sweeping) is to be performed. One or more cleaning apparatus 100 capable of the same cleaning action (e.g. one or more sweeping robots) may be designated and controlled to execute one cleaning operation layer at the same time so as to expedite the task execution. Each cleaning operation layer may comprise a plurality of operational protocols specified for at least one cleaning apparatus, e.g. operation parameters (such as an operation time period, a coverage area, and a robot navigation path) for the cleaning apparatus 100 to follow when performing the cleaning task.

In some embodiments, the task planning module 230 may consider the time factor and zone information for multi-layer cleaning strategy generation, especially if the designated cleaning area is a relatively large area. The task planning module 230 may divide the whole cleaning area to multiple cleaning zones, and sets out a cleaning operation plan for using different cleaning apparatus 100 to execute the cleaning task simultaneously at the multiple cleaning zones. Advantageously, time required for completing the cleaning task may be reduced.

The cleaning operation plan generated by the task planning module 230 is transmitted to the task execution module 240. Digital commands are transmitted to the corresponding cleaning apparatus 100 to execute the cleaning task based on the multi-layer cleaning operation plan. For example, the task execution module 240 would command a scrub robot 100e to execute a cleaning action according to a scrub layer in the cleaning operation plan. Information including the path the scrub robot has to follow, a brushing pressure it has to apply on the floor, and a profile of suction, is transmitted from the task planning module 230 to the task execution module 240 and to the registered scrub robot 100e to complete the task based on the scrub layer defined in the multi-layer cleaning operation plan.

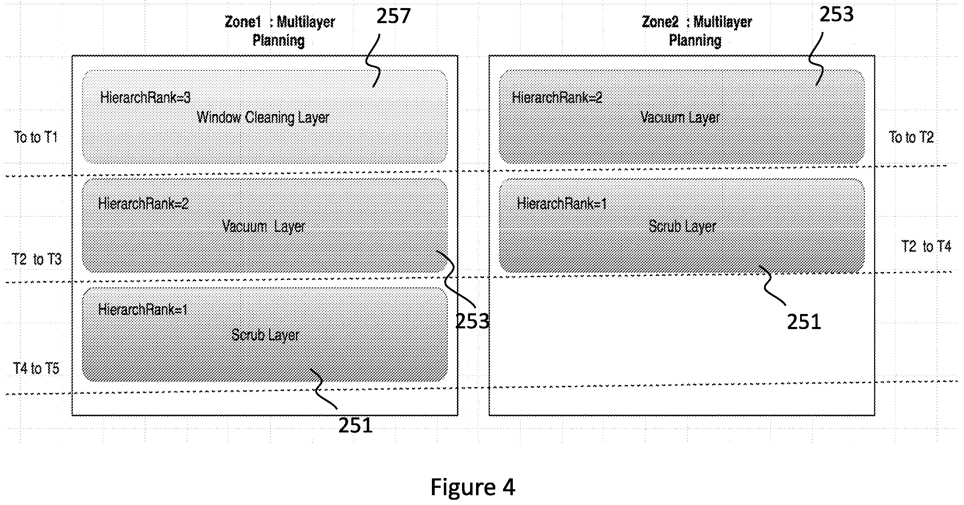

One non-limiting example of the multi-layer cleaning strategy generation and task execution is illustrated in Figure 4 and 5, whereby the robot registration module 210 has registered one scrub robot 100e (Robot ID #5), one vacuum robot 100b (Robot ID #3), and one window cleaning robot 100c (Robot ID #2) for a cleaning task to clean an office area 20, and the hierarchy generation module 220 has defined the hierarchy state of the three cleaning apparatus 100 as HierachRank=1, HierachRank=2, HierachRank=3 respectively. The necessary robot information and the hierarchy state of each apparatus are retrieved by the task planning module 230, based on which a multi-layer cleaning operation plan is generated. More specifically, the cleaning apparatus/robot 100 that is ranked number one in the robot hierarchy forms a base cleaning operation layer. The consecutive robots in the robot hierarchy form the consecutive cleaning operation layers on top of the base cleaning operation layer. The robot which is ranked least in the hierarchy will form the topmost cleaning operation layer.

As shown in Figure 4 the whole designated cleaning area has been divided into two cleaning zones according to the generated cleaning operation plan, one zone with a window area (Zone 1) and the other zone without any window area (Zone 2). The cleaning operation plan define a multilayer cleaning strategy for each of the two cleaning zones (cleaning Zone 1 and cleaning Zone 2) respectively. The multi-layer cleaning strategy for cleaning Zone 1 has three operation layers, wherein a first operation layer or a base layer is the scrub robot 100e (HierachRank=1), a second operation layer or a middle layer is the vacuum robot 100b (HierachRank=2), and a third operation layer or a top layer is the window cleaning robot 100c. (HierachRank=3). As can be seen, the three operating layers are generated according to the robot hierarchy assigned to the three robots, i.e. in the sequence of HierachRank=1 to HierachRank=3. For cleaning Zone 2 without any window area, only the scrub robot 100e and the vacuum robot 100b are deployed. Similarly, according to the robot hierarchy, the multi-layer planning strategy for Zone 2 forms two cleaning operation layers, i.e. a base layer with the scrub robot 100e (HierachRank=1) and a top layer with the vacuum robot 100b (HierachRank=2).

The multi-layer cleaning operation plan is then transmitted to the task execution module 240. The window cleaning robot 100c and the vacuum robot 100b are in operation simultaneously to clean Zone 1 and Zone 2 for a time period from To to T1. After completing the task execution for vacuum layer in Zone 2, the vacuum robot 100b moves to Zone 1 and continues to be in operation based on the task execution for vacuum layer in Zone 1 for a time period from T2 to T3. At the same time, the scrub robot 100e is in operation based on the task execution for the scrub layer in Zone 2 for a time period from T2 to T3. After completing the task execution for the scrub layer in Zone 2, the scrub robot 100e then moves to Zone 1 and continues in operation based on the task execution for the scrub layer in Zone 1 for a time period of T4 to T5. In this manner, the robot resource (i.e. the number of cleaning apparatus 100 used) and the time spent to clean the office 20 are both optimized.

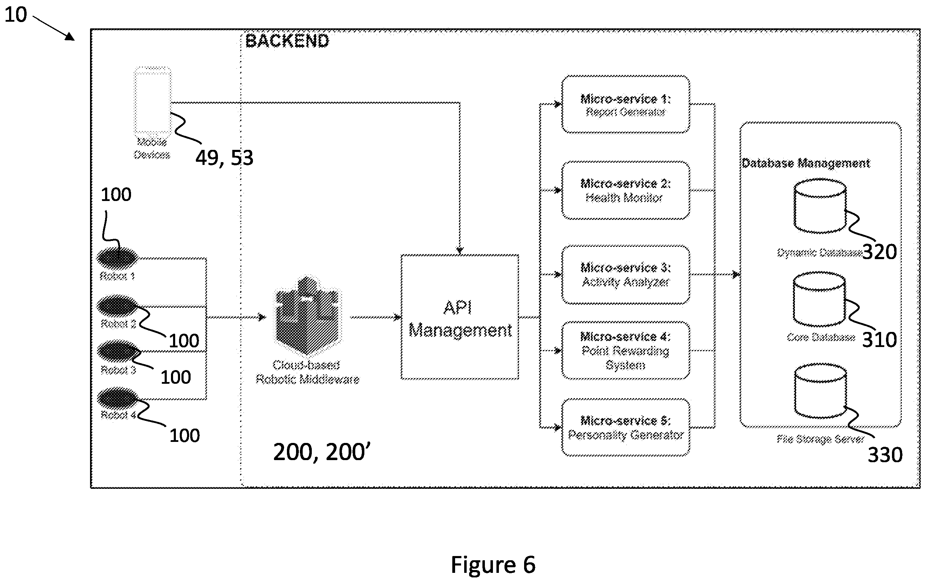

In various embodiments, the cooperative cleaning system 10 further comprises a user device 49 configured to be in data communication with the cloud server 200'. The user end device 49 may be an external computing device of any type suitable for communicating with cloud server 200', for example, a personal computer 51 as shown in the embodiment of Figure 1 or a mobile computer device 53 as shown in the embodiment of Figure 6. The user end device 49 can include a communication module configured to transmit data signals to the cloud server 200' using different types of wired or wireless communication, for example, through a cable network, or using Wi-Fi^{™} and Bluetooth^{™} wireless communication protocols. It is appreciable that the system 10 may be configured to communicate over through a network interface by way of different types of wireless or wired network devices and protocols. It is also appreciable that the system 10 may comprise more than one user end devices 49, allowing a user to access the system 10 at different locations.

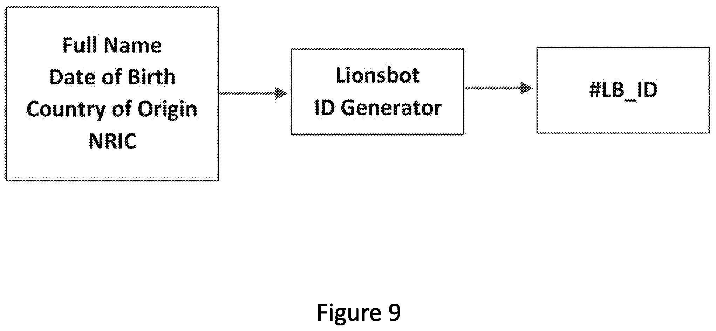

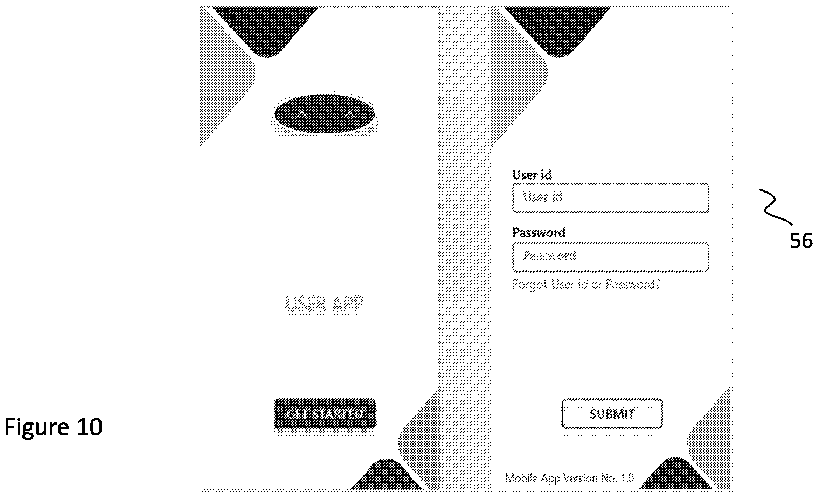

In various embodiments, the user device 49 comprises a user interface configured to receive information and commands from a user. The user interface may be a webpage interface, or an interface of a software program installed on the personal computer 51 or on the mobile device 53. In relation to the embodiment having a mobile device 53 as the user device 49, the user interface may be an application interface of a mobile application 56 on the mobile device 53. A non-limiting example of the mobile application 56 interface design is shown in Figure 9 and 10.

In various embodiment, the user device 49 is configured to receive a command from the user and transmit the command to a cleaning apparatus 100 that is also in data communication with the cloud server 200'. The cleaning apparatus 100 may be put in various operational modes. For example, the user may enter commands from the user device 49 to switch on and off the cleaning apparatus 100, or put the cleaning apparatus 100 in a power-saving mode. In various embodiments, the user device 49 is further configured to display information about the cooperative cleaning system 10 and the plurality of cleaning apparatus 100 connected to the cooperative cleaning system 10. With the user device 49, remote control and/or monitoring of the cooperative cleaning system 10 is achieved, where one device 49 may be used to add and control multiple cleaning apparatus 100 on the fly. In addition, the cleaning process of the system 10 may be further improved by configuring the user device 49 with other functionalities, as will be elaborated below.

In various embodiments, the cooperative cleaning system 10 is configured to execute a designated cleaning task based on one or more user defined parameters receive from the user device 49. More specifically, for robot hierarchy generation and the subsequent multi-layer cleaning strategy planning, the hierarchy generation module 220 and the task planning module 230 are configured to consider the one or more user defined parameters, in addition to the robot information or robot characteristics.

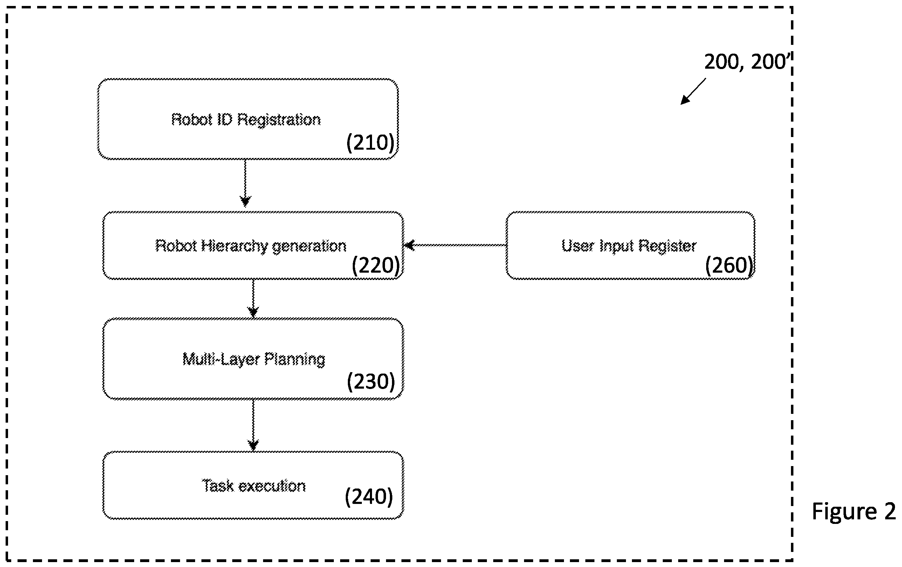

As shown in Figure 1 and Figure 2, the cloud server 200' may further comprise a user input register (or UIR) 260 for receiving, storing and processing the one or more user defined parameters. Based on the user defined parameters, the robot would dynamically plan the cleaning task execution order with the plurality of cleaning apparatus 100. The user defined parameters may include, but not limited to type of one or more cleaning tasks to be performed by the system, geographical information (such as location) of one or more designated cleaning area, infrastructure or environmental information of one or more designated cleaning area, priority information of the one or more designated cleaning tasks priority information of the one or more designated cleaning areas, and information (such as identification information) of a user. For example, a user may instruct the cooperative cleaning system 10 to prioritize areas to be cleaned and the type of cleaning action to be performed by entering such parameters on the user end device 49. The priority information is transmitted to and stored at the user input register 260. The hierarchy generation module 220 and the subsequent task planning module 230 retrieve such information from the user input register 260 for robot hierarchy generation and multi-layer cleaning operation planning.

In some embodiments, the user defined parameters may define one or more excluded zones that should be avoided from the cleaning during the cleaning task execution. For example, such excluded zones may be silent zones, danger zones, zones that should not be blocked or restricted, etc. The user can define these region as special zones before activating the system 10 to perform a cleaning task. These excluded zones may be common across the different families of cleaning robots.

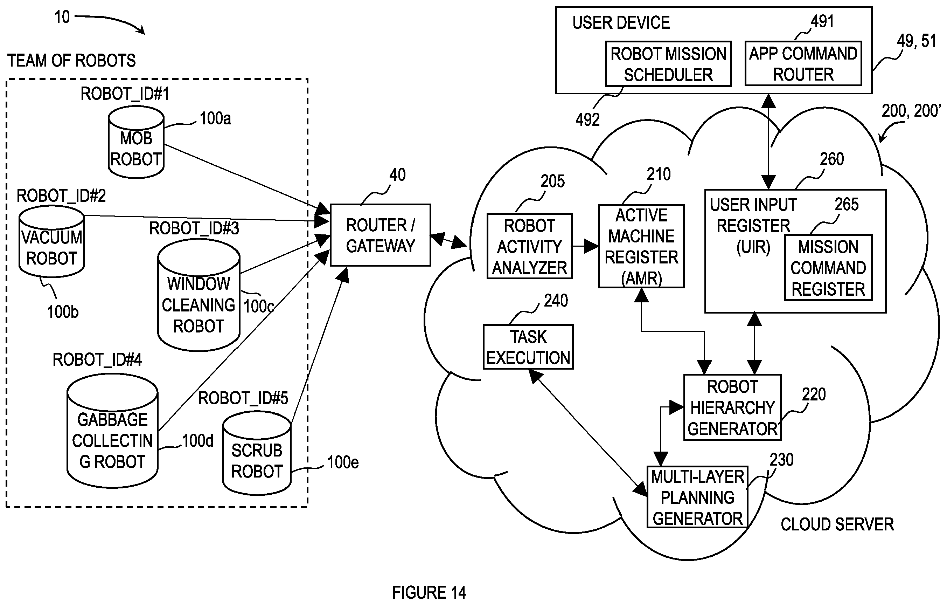

Figure 14 shows a more detailed version of the system 10 of Figure 1. The cloud server 200' includes a robot activity analyzer module 205. This robot activity analyzer module 205 provides an activity analyzer micro-service shown in Figure 6. The robot activity analyzer module 205 manages and monitors activities of each of the cleaning apparatus 100. These activities include, but are not limited to, cleaning operation, point-to-point moving operation, mingling operation, and robot health state monitoring alerts. The robot registration module 210 receives information of the cleaning apparatus 100 via the robot activity analyzer 205.

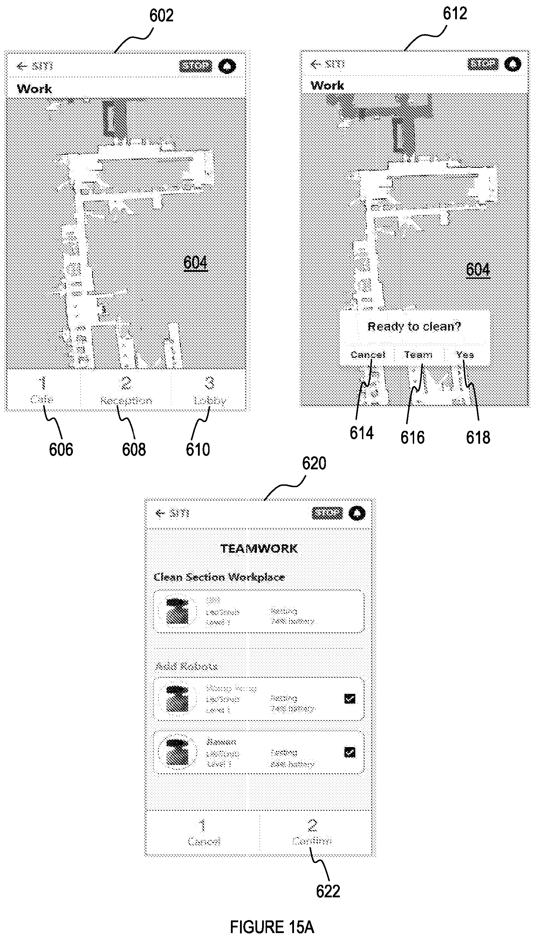

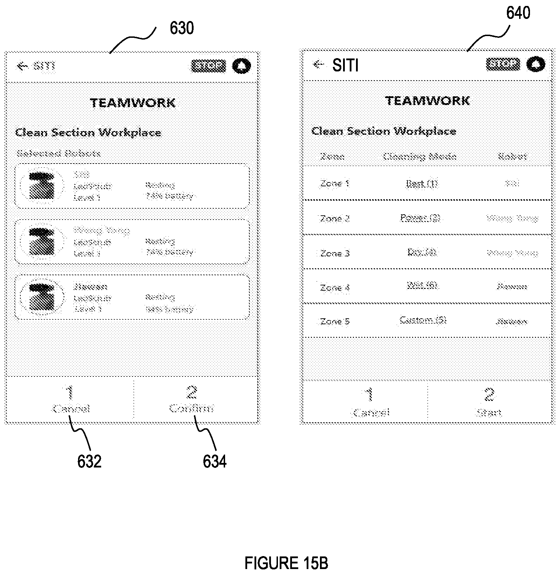

The UIR 260 may include a mission command register 265. This mission command register 265 receives mission commands from the user device 49. A mission command may include high-level information/variables such as, but not limited to, robots, cleaning zones, and cleaning times. The mission command register 265 stores these information. There are two ways that mission commands are generated and received by the mission command register 265. One way of generating a mission command is through an app running on the user device 49. When a user runs the app to start a cleaning operation/mission, the app will display a map either selected by the user or corresponding to the location of the operator or, more specifically, the location of the user device 49 held by the user. Figure 15A shows a first user interface (UI) screen 602 that is presented to the user. The first UI screen 602 includes a map 604 and three area indicia 606, 608, 610 indicating different floor areas for cleaning. In Figure 15, the floor areas for cleaning are a cafe, a reception area, and a lobby. The user is able to make a selection of the cleaning area by selecting the corresponding indicium 606, 608, 610 and a second UI screen 612 is then displayed. The map 604 in the second UI screen 612 may include a zoomed-in map (not shown) of the selected area. This second UI screen 612 includes three selection indicia 614, 616, 618 that overlay the map 604 to allow the user to select if and how cleaning of the earlier selected area is to proceed. The user can select a "cancel" indicium 614 to cancel the cleaning operation, select a "team" indicium 616 to proceed with the cleaning operation using a team of robots or select a "yes" indicium 618 to proceed with the cleaning operation using a single robot. If the user selects the "team" indicium 616 on the UI screen 612, a third UI screen 620 as shown in Figure 15A will be displayed on the user device 49. This third UI screen 620 shows a robot "Siti" having been already selected and two other robots "Wong Yong" and "Jianwan" that are available for selection. If the user selects both these available robots and select a "confirm" indicium 622, a fourth UI screen 630 as shown in Figure 15B will be displayed on the user device 49. This fourth UI screen 630 shows all the robots that are selected to be in the team of robots for cleaning. At this stage, the user has the options to cancel the cleaning operation by selecting a "cancel" indicium 632 or proceed with the cleaning operation by selecting a "confirm" indicium 634. If the user chooses to proceed with the cleaning operation by selecting the "confirm" indicium 534, the information captured, namely, the area to be cleaned and the robots selected, will be sent to the mission command register 265 via an app command router 491 on the user device 49. The mission command register 265 will then forward the received information to the hierarchy generating module 220 for immediate processing. When a cleaning operation plan is available, information regarding which zone in the cleaning area each robot will be deployed is provided to the user via a suitable UI screen 640 on the user device 49.

Another way of generating a mission command is through a robot mission scheduler 492 running on the user device 49. Through this robot mission scheduler 560, the operator is able to create predetermined cleaning schedules for one or more worksites. Each schedule will include an area for cleaning and a start time for cleaning that area. The robot mission scheduler 492 sends the cleaning schedules to the mission command register 265. The mission command register 265 monitors the start times and automatically initiate a corresponding cleaning operation when the current time matches the start time of a cleaning schedule. The predetermined schedule does not include any robot information. The cleaning operation will involve whichever robot is available in the cleaning area at the start of the cleaning operation.

In accordance to another aspect, the present disclosure also relates to a system for controlling a plurality of task-specific apparatus. The system comprises a plurality of task-specific apparatus, at least one of the plurality of task-specific apparatus is configured to communicate with a processor unit. The system also comprises a user device configured to receive one or more instructions from a user and configured to communicate with the processor unit. The processor unit comprises: - a control manager for generating a high-level control command based on one or more instructions received from the user device; and an action generator for generating a device-specific control command for each of the plurality of task-specific apparatus from the high-level control command. The processor unit is further configured to transmit the apparatus-specific control command to the corresponding apparatus for execution.

In various embodiments, the plurality of task-specific apparatus may be autonomous or semi-autonomous machines and/or robots operable to perform a designated task. The designated task may include, but is not limited to a cleaning task. The task-specific apparatus may include, but is not limited to a cleaning apparatus 100 as described above. The plurality of task-specific apparatus may include multiple apparatus that are operable to perform different tasks. For example, the plurality of task-specific apparatus may include one or more cleaning apparatus 100, one or more cooking apparatus, one or more smart lighting devices and etc. The system 10 provides a single platform from where the user may exercise control of the multiple task-specific apparatus.

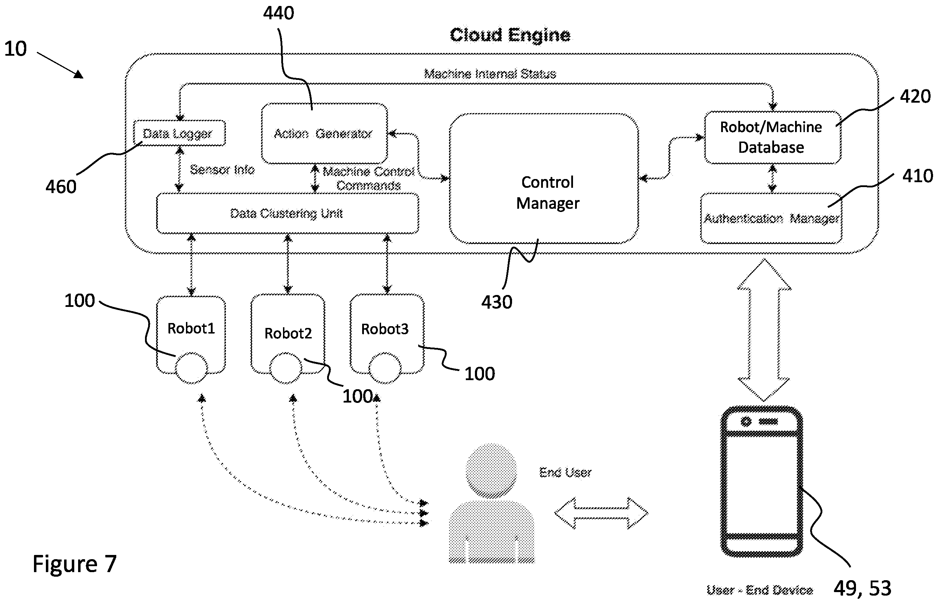

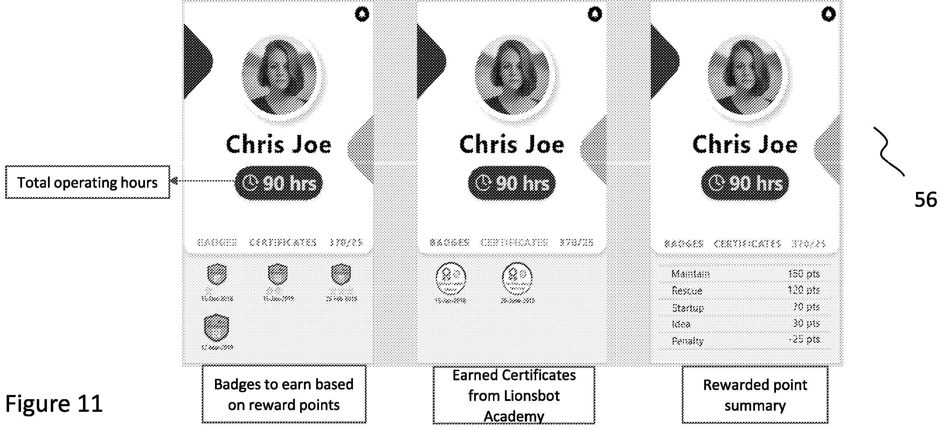

In a non-limiting example as illustrated in Figures 7 to 15, there is provided a system 10 operable to control a plurality of cleaning apparatus 100, of different types, from a user device 49. It is appreciable that the above-described cleaning apparatus 100 and system 10 may be adapted to allow remote control of the cleaning apparatus 100, i.e. to provide a teleoperation system 10. Similar functional modules/components/devices in the cleaning apparatus 100 and the cooperative cleaning system 10 have the same or similar reference numbers in Figures 7 to 15. The description of the functional modules/components/devices of the cleaning apparatus 100 and the cooperative cleaning system 10 may also apply the teleoperation system 10.

In various embodiments, the system 10 comprises a plurality of cleaning apparatus 100. Each cleaning apparatus 100 is capable of performing at least one cleaning action, and the plurality of cleaning apparatus 100 are configured to communicate with a processor unit 200. The system 10 also comprises a user device 49 configured to receive one or more instructions from a user and configured to communicate with the processor unit 200. A user may control the operation of the plurality of cleaning apparatus 100 through a specially designed software interface/mobile application 56.

To allow remote control from the user device 49, the processor unit 200 of the system 10 is incorporated with additional functional modules/subsystems. Figure 6 illustrates a functional block diagram of a system 10 with a user device 49 for controlling a plurality of cleaning apparatus 100. In this non-limiting example of the system architecture shown in Figure 6, the user device 49 is in the form of a mobile device 53 (such as a mobile phone) having a specifically designed mobile application 56 installed thereon, and the processor unit 200 is in the form of a cloud server 200'. The mobile application 56 provides a software interface for the user to control and manage multiple cleaning apparatus 100. A non-limiting example of the software interface of the mobile application 56 is shown in Figure 10, Figure 11 and Figure 13A and 13B.

In various embodiments, the processor unit 200 comprises:-a control manager 430 for generating a high-level control command based on one or more instructions received from the user device 49; and an action generator 440 for generating a device-specific control command for each of the plurality of cleaning apparatus 100 from the high-level control command (based on a robot information of the corresponding cleaning apparatus). The processor unit 200 is configured to transmit the one or more device-specific control commands to the corresponding cleaning apparatus 100 for execution. The step of 'generating a high-level control command' and "generating a device-specific control command" may include one or more steps of assigning, calculating and deriving.

In various embodiments, the control manager 430 is configured to receive one or more instructions from the user device 49, and more specifically, from the software interface/application on the user device 49. The instructions may relate to an instruction for navigating one or more cleaning apparatus to one or more intended destination, one or more user defined parameters for the cleaning apparatus to follow when performing task execution which may include task priority information (e.g. to prioritize cleaning zone 1 over cleaning zone 2), and operation parameters (e.g. an operation time period, a coverage area, a robot navigation path for the cleaning apparatus and etc.). The control manager 430 is configured to generate a high-level control command for the respective cleaning apparatus 100 based on the user instructions. In some embodiments, the robot information of the respective cleaning apparatus 100 may also be taken into account for generating the high-level control command. The high-level control command describes the operations of the respective cleaning apparatus 100 in a relatively high level of abstraction whereby the conceptual functions/objectives of the different cleaning apparatus 100 may be expressed in a structured manner. For example, the high level control command may be generated to describe the overall goals and cleaning operation plans of the different cleaning apparatus 100.

In various embodiments, the activity generator 440 is configured to generate a device-specific control command for each of the plurality of cleaning apparatus 100 from the high-level control command. The device-specific control command describes the operations and actions to be performed by each cleaning apparatus 100 in detail. A low-level programming language such as assembly language that contains rudimentary microprocessor commands may be used for generating the device-specific control command. The device-specific control command may be transferred to and executed by the corresponding cleaning apparatus 100. No or little further processing of the device-specific control command at the cleaning apparatus 100 is required.

Generation of the device-specific control command is based on the robot information of the corresponding cleaning apparatus and user instructions embedded in the high-level control command. As described above, the robot information may include, but is not limited to identification information of the cleaning apparatus 100 (i.e. Robot ID), geographical information of the cleaning apparatus 100, a current operational state of the apparatus 100, and a current power consumption status, battery management data, hours of operation, health status, error status, characteristics of working environment (which may comprise exteroceptive and proprioceptive sensor data), and fault-diagnostic information.

In some embodiments, the processor unit 200 further comprises an authentication manager 410 for processing and authenticating a robot information of a corresponding cleaning apparatus 100. The authentication manger 410 may be connected to a robot database 420 configured to store the robot information of the plurality of cleaning apparatus 100. The authentication manager 410 may search and retrieve the robot information of a particular cleaning apparatus 100 for authentication. Authentication may be multi-factored. Details of such a multi-factor authentication will be described later. Once the authentication is completed by the authentication manager 410, the robot information and instructions from the user may then be transferred to the control manager 430 for generating the high-level command.

The robot database 420 stores robot information, infrastructure information and user information. Robot information includes, but is not limited to, unique serial numbers of the cleaning apparatus 100 and corresponding data that is necessary for their operation. For example, if the robot is an autonomous floor cleaning robot, the robot information may include its serial number and settings for cleaning. Such settings include amount of water required, amount of cleaning liquid required, etc. for cleaning. Infrastructure information includes information relating to the environment of operation for the machine. For example, if the machine is autonomous floor cleaning robot, infrastructure information for the robot could include a floor map, the path the robot is required to take for cleaning, the cleaning zones within a cleaning area, forbidden zones that the robot should not be accessing, time slots for cleaning the cleaning zones, etc.

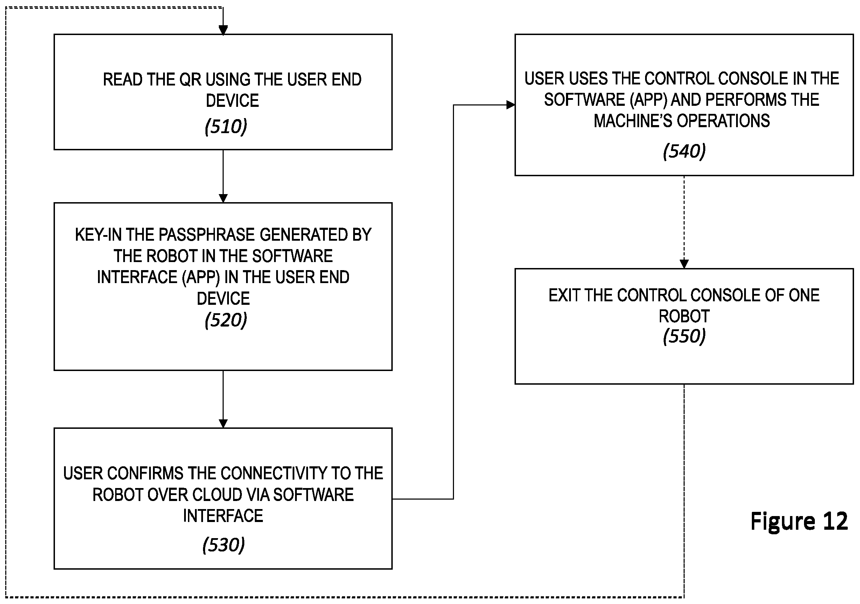

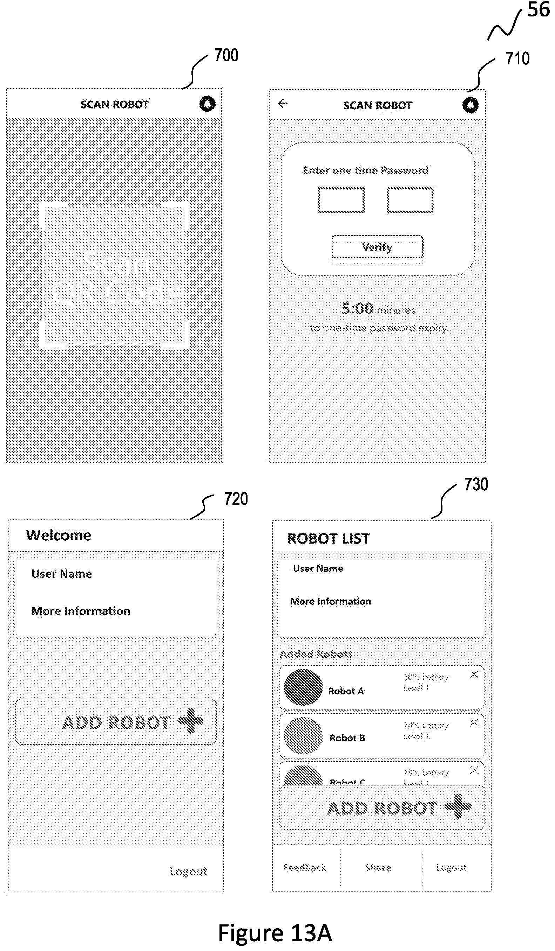

In various embodiments, the authentication of the robot information comprises a two-factor authentication, as illustrated in steps 510 to 530 of Figure 12 and in Figure 13A.

In a first step 510, a user reads the robot information using the user device 49 via a UI screen 700. The robot information may be embedded in a QR code or bar code displayed on a printed tag adhered to cleaning apparatus 100 or on a digital display unit of the cleaning apparatus 100. The scanned robot information is then sent from the user device 49 to the processor unit 200. A passphrase is generated by the system 10 based on the robot information received from the user device 49. Particularly, a pre-assigned serial number embedded in the QR code or a bar code may be transmitted to the processor unit 200 of the system 10 as a cloud service request. Once the authentication manager 410 at the processor unit 200 receives the serial number of the cleaning apparatus 100 from the user device 49, the authentication manager 410 generates a one-time passphrase which may be valid for only a prescribed time period. The passphrase may be sent to the cleaning apparatus 100 to be displayed on a display unit of the cleaning apparatus 100. Alternatively, the passphrase may be sent to the user device 49 for displaying to the user, or may be sent to a user-registered email address or a user-registered phone number.

In a further step 520, the user interface is automatically updated to display a new page 710 for the user to key in the passphrase generated by the authentication manager 410. The user keys in the passphrase in the software interface. The user device 49 sends the entered passphrase to the processor unit 200. If the user inputs the correct passphrase on the user device 49, i.e. the user entered passphrase matches that generated by the authentication manager 410, the authentication manager 410 operates to register the robot's details in the robot database 420 and allows the user to control the particular cleaning apparatus 100.

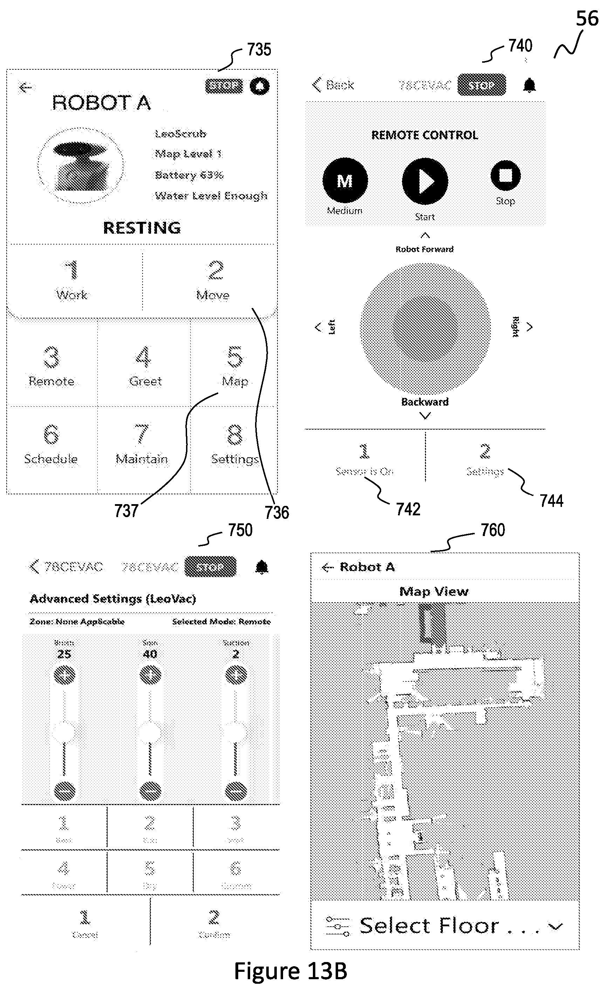

In a further step 530, the user confirms the connectivity to one or more the cleaning apparatus 100 by repeating the steps 510 and 520. More specifically, upon successful authentication using the one-time passphrase, the user interface updates to a new page 720 for a user to confirm which cleaning apparatus 100 to control. As can be seen from Figure 13A and 13 B, one or more cleaning apparatus 100 may be added to allow remote control by the user. A UI screen 730 in Figure 13A shows cleaning apparatus 100 "Robot A", "Robot B" and "Robot C" that are connected to the user via steps 510, 520 and added by the user via the UI screens 620, 630.

In various embodiments, the system 10 may be used to control any number of cleaning apparatus 100. In the above step 530, the user may select any suitable cleaning apparatus 100 from the robot list to form a work team based on the cleaning task to be performed.

In a further step 540, the user may enter a control console/control interface 735 of a particular cleaning apparatus 100, and perform the robot operation. The user may select a move indicium 736 in the control interface 735 to control the movement of the cleaning apparatus 100. Such an action will result in a user being presented with a control console/control interface 740. The control console/control interface 740 may comprise one or more navigation consoles to navigate the cleaning apparatus 100 in a desired direction or to a desired destination. For example, as shown in Figure 13B, the control console 740 displays necessary buttons, slide bars and navigation buttons for the user to control the navigation and task operation of the cleaning apparatus 100 remotely via the cloud engine. As such, direct data connectivity between a cleaning apparatus 100 and the user device 49, such as using Bluetooth or WIFI, is not required. The control console 740 also includes a sensor on/off toggle control indicium 742 for turning sensors, such as distance sensors, of the cleaning apparatus 100 on and off. In some embodiments, when the distance sensors detect a passage width that may be narrow for the cleaning apparatus 100 to automatically maneuver past, the cleaning apparatus 100 may not be allowed to proceed with its cleaning operation. The user may be able to turn the distance sensors off and switch to maneuvering the cleaning apparatus 100 using the navigation buttons instead so that cleaning operation may resume. The control console 740 further includes a cleaning settings indicium 744. When this cleaning setting indicum 744 is selected, a cleaning apparatus specific UI screen 750 for controlling settings thereof is displayed on the user device 49 for adjustment of control settings. If the map indicium 737 in the control interface 735 is selected, a map 760 showing the location of the cleaning apparatus 100 will be displayed on the user device 49.

In a further step 550, the user may exit from the control console/control interface for one cleaning apparatus 100 upon completion of a cleaning task. The user may toggle between different control consoles/control interfaces in the software interface to control and navigate different cleaning apparatus 100 from the list of robots. The user may also remove one or more cleaning apparatus 100 from a work team, i.e. to disconnect the cleaning apparatus 100 from the user device 49. For example, one or more cleaning apparatus may be removed from a work team after completing a cleaning task, and add one or more other cleaning apparatus 100 to form a new work team for a new cleaning task by following the same steps as described above.

In various embodiments, the system 10 is configured to monitor and track the robot information (e.g. health status, error status, operational state of the apparatus, and etc.) and the operation activities of plurality of the cleaning apparatus 10 from the user device 49. Besides the control console, the software interface may further provide an interface for real-time monitoring of tasks performed by the cleaning apparatus 100, the operational state of the cleaning apparatus 100, and environmental/geographical information measured by the perception sensors of the cleaning apparatus 100. The software interface also allows the user to locate the different cleaning apparatus 100 on a map (which may be pre-installed in the mobile application, or may be populated based on information collected by the perception sensors of the one or more cleaning apparatus 100) and monitor their respective movement, locomotion and operational status. In the example shown in Figure 13B, when operating the cleaning apparatus 100, the user may refer to the map 760 on which the real-time location of the cleaning apparatus 100 (e.g. achieved by a GPS system installed on the cleaning apparatus) is highlighted/indicated. The user may manually control the cleaning apparatus 100 to navigate to different locations. Alternatively, the user may enter a destination from the control console or from the map, and control the cleaning apparatus 100 to move to the destination in an autonomous manner.

In various embodiments, the processor unit 200 further comprises a data clustering unit 450 for managing the inflow of sensor data and outflow of control commands between the cleaning apparatus 100 and the processor unit 200. The data clustering unit 450 routes information received from the cleaning apparatus 100 to a contiguous groups of sectors (or clusters) in one or more disks/databases of the processor unit 200. The data clustering unit 450 manages space allocation on the processor unit 200 by reducing the overhead data-system structure. For example when receiving sensor data from the cleaning apparatus 200, the data clustering unit 450 may retrieve/separate a perception sensor data from other information received from the cleaning apparatus 100. Similarly, the device-specific control commands from the action generator 440 is transferred to the respective cleaning apparatus 100 via the data clustering unit 450.

In some embodiments the data clustering unit 450 may be connected to a data logger 460 which receives raw sensor data from the cleaning apparatus 100 via the data clustering unit 450, analyses the sensor data, and processes the sensor data into a meaningful, actionable perception information. The data logger 460 may update the robot perception information in the robot database 420 for use in one or more other micro-services (for example, for generation of robot personality/characteristics).

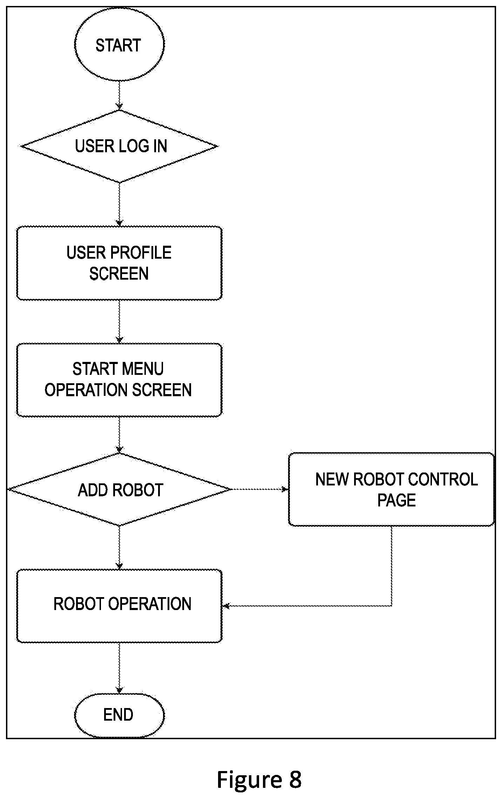

In various embodiments, each user of the cooperative cleaning system 10 is registered with a user account under a unique user ID. In order for the user to access and control the cleaning apparatus 100, a registration and verification (or log in) step is required. As shown in Figure 8, personal name information and personal identity number (NRIC) corresponding to the user's respective countries are required for this unique ID generation and the ID will be valid for lifetime. One user will have only one ID and it will follow the user for life, and each robot may be assigned to a dedicated cleaner during day-to-day operation. Accordingly, security of the system is improved. A non-limiting example of the operation flow to be flowed by a user is illustrated in Figure 8, which includes the following steps: (a) User log in: A user enter his/her registered account information to log in to the system in a secure manner. (b) User Profile Screen: The user, after logging in to the system, may go to the user profile portal to enter and/check relevant user information. For a new user, he/she may be required to enter the requisite user information to proceed further. (c) Start Menu/Operation Screen: Information of available cleaning apparatus in the system is displayed on the operation screen. For a particular cleaning task, the user activates/adds one or more cleaning apparatus 100. (d) Robot Operation: The user may then go to the robot operation page, i.e. the control interface/user interface to enter commands or define any operating parameters before activating the cleaning apparatus 100 to execute the cleaning task.

In addition to tracking the robot status/activities, the system 10 may be further configured to manage and track a particular users' historical activities. As mentioned, each cleaning apparatus 100 has been set up and assigned to at least one user/cleaner. Accordingly, the system 10 tracks the robot information and the operation activities in relation to the one or more cleaning apparatus 100 that have been operated by or have been assigned to a particular user.

The monitoring and the tracking of the robot information and the user historical activities may be jointly achieved by more than one embedded micro-services as shown in Figure 6. For example, a Report Generator micro-service, a Health Monitor micro-service, and an Activity Analyzer may be embedded or programed in the user device 49 and in the backend cloud server 200' as illustrated in Figure 6. Particularly, the activity analyzer micro-service is configured to subscribe to the robot information (such as the operational status) of each cleaning apparatus 100 as well as user activity/command sent via the mobile application 56. Upon the end of cleaning task execution, the activity analyzer will create an activity record paired with a user ID.

In various embodiments, the cleaning apparatus 100 and the corresponding users' activities are constantly recorded and uploaded to the cloud server 200' to allow further processing. User historical information such as performance of each cleaning operation, emergency record and cleaner operation command can be tracked. For example, as shown in Figure 6, a core database 310 at the backend of the system 10 may be configured to retrieve and process the user historical information, and a file storage sever 320 may be used to store system-related information including the user historical information. In this manner, the user historical information can be traced via the unique user ID. This provides the advantages of cultivating sense of accountability and responsibility in users (who may be cleaners performing the cleaning task using the system 10) on how they should interact with robots 100 they are assigned to.

In some embodiments and with reference to Figure 8 and Figure 10, system 10 is further programed with a Point Rewarding System for recording and tracking the performance of each user. Badges will be rewarded to the cleaners when they have completed certain positive tasks such as robot cleaning maintenance, and to red-flag them accordingly for negative tasks completed. Points are collected and constantly compared among the global user population and the ranking system is introduced to feature the best performing user and to reward the user accordingly.

More specifically, a user may be rewarded based on the following: - (a) Maintenance Point: The user or cleaner is expected to conduct weekly maintenance on the cleaning apparatus 10 upon receiving a notification from the mobile application or the software program. Maintenance sequences may include but not limited to recovery water tank cleaning, brush and squeegee defect check and replacement, electrical system check, and etc. Upon completion, maintenance point is then rewarded for the user. (b) Rescue Point: In the event where the cleaning apparatus 10 encounters any warning or emergency situations, the user will be notified via the mobile application notification or the software program. When the user attend to the robot, rescue point is then rewarded and the points vary from the severity of emergency states. (c) Startup Point: The startup point is rewarded if the user is able to turn on and perform good handling of robot navigation from docking/home position to a first cleaning area or a first designated cleaning zone of the day and run cleaning operation. (d) Suggestion Point: Suggestion and feedback are strongly encouraged and good construction suggestion shall be rewarded accordingly. In the mobile application or the software program, there is a section where user can register their concern and feedback on how robot performance can be improved. (e) Technician Review Point: The technician review point is rewarded based on the review given by the technician who performs period maintenance to the robots. At the end of each maintenance, the technician is able to know if the cleaner has managed the robot well.

In some embodiments, the software program or the mobile application 56 on the user end device 49 may be further configured to collect and track the qualification of the user. The qualification tracking portal may be referred to as an "Academy Certification Track". This portal introduces an ecosystem on cleaning industry where all cleaners' skillsets on different types/families of cleaning robots are verified and certified. Further, it also provide trainings for a user to upgrade their skillsets, and certificates may be issue/earned upon meeting the prescribed requirements in relation to a particular aspect of the operation of the cooperative cleaning system 10.

The Academy Certification Track may provide trainings to the users/cleaner and track their qualification with respect to the following aspects: - (a) Robot Control and Usage (Robot Type/Family Specific): In this track, the user will be trained on how to operate the robot to perform cleaning efficiently and safely during his/her daily operation. The training consists of the introduction of robot features, usage of the mobile application or the user interface, and robot maintenance operation. (b) Cleaning Deployment and Marketing (Robot Type/Family Specific): The user will be trained on how to perform on-site assessment, generate site analysis report, and conduct robot deployment. (c) Service and Repair (Robot Type/Family Specific): Depending on the type of robot from varies family, the user will be trained on how to conduct period maintenance and part repairs. (d) Other aspects in relation to the cooperative cleaning system 10, such as sales and marketing, cloud administration, and etc.

The system 10 of the present disclosure is advantageous in at least the following aspects: (a) Firstly, the system 10 provides a solution for multi-robot cooperative cleaning operation with optimized cleaning task execution order. (b) The cooperative cleaning system which may be remotely controlled is capable of a relatively higher level of automation as compared with existing cleaning machine deployment systems, and requirement of human involvement to operate the cooperative cleaning system 10 is minimized. (c) The cooperative cleaning managed via cloud computing may be embedded with various micro-services, such as a personality generator which allows dynamically adjusting robot behavior based on perception sensor data and based on user defined parameters to further improve cleaning efficiency and effectiveness and etc.

Further, the network-connected user device with the specially designed software interface/mobile application provides additional benefits as follows: (d) The plurality of cleaning apparatus and the user device are connected through an internet interface. As such, robot - user device direct connectivity (e.g. via Bluetooth^{™}/ WI-FI^{™}) is not required. (b) The software interface/mobile application can be used to control both homogenous and heterogeneous robots; Flexibility of adding and removing a cleaning apparatus for a certain team task at the choice of the user is also allowed. (c) The software interface/mobile application allows the user to connect to any number of robots. Particularly, in relation to embodiments where a cloud-based server is used as the processor unit, the capacity of the server and thus the number of cleaning apparatus/robots that can be controlled by the user device is not restricted. (d) Simple two factor authentication process using QR code/bar code scanning and passphrase ensures secure connection between the cleaning robot and the user device via the processor unit/ the cloud server. (e) The software interface/mobile application integrates the tracking of robot activities and user performance in one single platform, which provides additional benefits of cultivating sense of accountability and responsibility in users.

It is to be appreciated by the person skilled in the art that variations and combinations of features described above, not being alternatives or substitutes, may be combined to form yet further embodiments falling within the intended scope of the disclosure. In particular: - (a) the system may be applied to remotely control any number of cleaning apparatus of any type, notwithstanding the illustrations in the Figures; (b) Although the present disclosure is described in the context of operation of cleaning apparatus, it may also be applied to control any other types of autonomous or semi-autonomous machines/robots with a compatible hardware and software operating system. The machines/robots may be both homogenous (i.e. of the same type) or may be heterogeneous (i.e. of different types). (c) The subsystems and micro-services of the processor unit 200 may operate on different computing devices, servers, and record resources, which may be at a backend physical/virtual server system as illustrated in Figure 1 and 6. As an addition or an alternative, some of the subsystems and micro-services may be achieve be the computing systems of the user device and/or the computing system onboard one or more cleaning apparatus. For example, the cleaning apparatus may be capable of locomotion and route mapping based on perception sensor inputs in some embodiments. Alternatively, the route mapping or part of the route mapping function may be achieved at a backend database server or at the user device.

### REFERENCE

- 10: system
- 20: cleaning area
- 40: router
- 49: user end device
- 51: personal computer
- 53: mobile device
- 56: mobile application
- 100: cleaning apparatus
- 100a: mop robot
- 100b: vacuum robot
- 100c: window cleaning robot
- 100d: garbage collecting robot
- 100e: scrub robot
- 121: controller module
- 125: cleaning module
- 127: personality module
- 133: perception sensors
- 136: navigation module
- 139: communication module
- 140: power supply and management module
- 144: safety layer trigger
- 200: processor unit
- 200': cloud server
- 210: robot registration module
- 220: hierarchy generation module
- 230: task planning module
- 240: task execution module
- 251: scrub layer/base layer
- 253: vacuum layer/middle layer
- 257: window cleaning layer/top layer
- 260: user input register (UIR)
- 310: core database
- 320: dynamic database
- 330: file storage sever
- 410: authentication manager
- 420: robot/machine database
- 430: control manager
- 440: action generator
- 450: data clustering unit
- 460: data logger
- 510-550: steps of controlling one or more cleaning apparatus

## Claims

1. A system for performing a designated task, comprising: -
a plurality of task-specific apparatus (100), at least one of the plurality of task-specific apparatus (100) is configured to communicate with a processor unit (200); and
a user device (49) configured to receive one or more instructions from a user and configured to communicate with the processor unit (200),
wherein the processor unit (200) comprises: -
- a control manager (430) for generating a high-level control command based on the one or more instructions received from the user device (49);
- an action generator (440) for generating a device-specific control command for each of the plurality of task-specific apparatus (100) from the high-level control command, wherein the processor unit (200) is configured to transmit the device-specific control command to a corresponding task-specific apparatus (100) of the plurality of task specific apparatus (100) for execution;
- an authentication manager (410) configured to:
- receive from a user a robot information of a task-specific apparatus (100);
- generating a passphrase based on the received robot information;
- providing the user with the generated passphrase;
- receiving a user provided passphrase from the user; and
- allowing the user to control the task-specific apparatus (100) if the user provided passphrase matches the generated passphrase; **characterized in that**:
- a body of the task specific apparatus (100) comprises a printed tag with a QR code or a bar code associated with the robot information wherein the robot information is configured to be read by the user device (49) for generating the passphrase, and wherein the robot information comprises a robot ID, geographical information, a current operational state, a current power consumption status, battery management data, hours of operation, health status, error status, characteristics of working environment, and fault-diagnostic information;
- the designated task is a cleaning task and the task-specific apparatus (100) are cleaning apparatus (100);
- a hierarchy generation module (220) for determining a hierarchy state for the plurality of task specific apparatus (100) based on the robot information; wherein the robot information being at top most priority for hierarchy generation; and
- a task planning module (230) for generating a cleaning operation plan based on at least the hierarchy state assigned to the plurality of task specific apparatus (100) and the designated cleaning task, wherein the cleaning operation plan comprises multiple cleaning operation layers with each operation layer comprising a plurality of operational protocols specified for at least one task specific apparatus (100).

2. The system according to claim 1, wherein providing the user with the generated passphrase comprises sending the generated passphrase to the task-specific apparatus (100) for retrieval by the user.

3. The system according to claim 1, wherein providing the user with the generated passphrase comprises one of:
sending the generated passphrase to a user-registered email address of the user;
sending the generated passphrase to a user-registered phone number of the user; and
sending the generated passphrase to a user device of the user from which the authentication manager receives the robot information.

4. The system according to any one of claims 1 to 3, wherein the processor unit (200) further comprises a data clustering unit (450) for managing the inflow and outflow of data between the processor unit (200) and the plurality of task-specific apparatus (100).

5. The system according to any one of claims 1 to 4, wherein the plurality of task specific apparatus (100) comprises one or more cleaning apparatus, each cleaning apparatus is capable of performing one or more of the following cleaning actions: sweeping, vacuuming, scrubbing, mopping, window cleaning, table cleaning garbage collecting, arrangement of furniture for facilitating cleaning.

6. The system according to any one of claims 1 to 5, wherein the processor unit (200) comprises at least a cloud server.

7. The system according to any one of claims 1 to 6, wherein the system is configured to track and record activities of the plurality of task-specific apparatus (100) and/or of the user.

8. The system according to one of the claims 1 to 7, wherein the task planning module (230) is configured to consider time factor and zone information for generating the cleaning operation plan.

9. The system according to one of the claims 1 to 8, wherein the hierarchy generation module (220) is configured to determine a rank for the plurality of task-specific apparatus (100) in the hierarchy state with each apparatus (100) forming the operation layer based on the rank.

10. The system according to one of the claims 1 to 9, wherein the plurality of operational protocols are operation parameters such as an operation time period, a coverage area, and a robot navigation path for the plurality of task specific apparatus (100) to follow when performing the designated cleaning task.

11. The system according to one of the claims 1 to 10, wherein the cleaning operation plan generated by the task planning module (230) is transmitted to a task execution module (240) to execute the designated cleaning task.

## Patentansprüche

1. System zum Durchführen einer bestimmten Aufgabe, umfassend:
eine Vielzahl von aufgabenspezifischen Vorrichtungen (100), wobei mindestens eine der Vielzahl von aufgabenspezifischen Vorrichtungen (100) konfiguriert ist, um mit einer Prozessoreinheit (200) zu kommunizieren; und
eine Benutzervorrichtung (49), die konfiguriert ist, um eine oder mehrere Anweisungen von einem Benutzer zu empfangen, und konfiguriert ist, um mit der Prozessoreinheit (200) zu kommunizieren,
wobei die Prozessoreinheit (200) umfasst:
- einen Steuerungsmanager (430) zum Erzeugen eines Steuerungsbefehls auf hoher Ebene basierend auf der einen oder den mehreren Anweisungen, die von der Benutzervorrichtung (49) empfangen werden;
- einen Aktionsgenerator (440) zum Erzeugen eines vorrichtungsspezifischen Steuerungsbefehls für jede der Vielzahl von aufgabenspezifischen Vorrichtungen (100) aus dem Steuerungsbefehl auf hoher Ebene, wobei die Prozessoreinheit (200) konfiguriert ist, um den vorrichtungsspezifischen Steuerungsbefehl an eine entsprechende aufgabenspezifische Vorrichtung (100) der Vielzahl von aufgabenspezifischen Vorrichtungen (100) zur Ausführung zu übertragen;
- einen Authentifizierungsmanager (410), der konfiguriert ist, um:
- Empfangen, von einem Benutzer, einer Roboterinformation einer aufgabenspezifischen Vorrichtung (100);
- Erzeugen einer Passphrase basierend auf der empfangenen Roboterinformation;
- Bereitstellen, der erzeugten Passphrase, für den Benutzer;
- Empfangen einer vom Benutzer bereitgestellten Passphrase von dem Benutzer; und
- Ermöglichen, dass der Benutzer die aufgabenspezifische Vorrichtung (100) steuert, wenn die vom Benutzer bereitgestellte Passphrase mit der erzeugten Passphrase übereinstimmt; **dadurch gekennzeichnet, dass**:
- ein Körper der aufgabenspezifischen Vorrichtung (100) ein gedrucktes Etikett mit einem QR-Code oder einem Strichcode umfasst, der der Roboterinformation zugeordnet ist, wobei die Roboterinformation konfiguriert ist, um von der Benutzervorrichtung (49) zum Erzeugen der Passphrase gelesen zu werden, und wobei die Roboterinformation eine Roboter-ID, geografische Information, einen aktuellen Betriebszustand, einen aktuellen Stromverbrauchsstatus, Batterieverwaltungsdaten, Betriebsstunden, Gesundheitszustand, Fehlerstatus, Eigenschaften der Arbeitsumgebung und Fehlerdiagnoseinformation umfasst;
- die bestimmte Aufgabe eine Reinigungsaufgabe ist und die aufgabenspezifische Vorrichtung (100) Reinigungsvorrichtungen (100) sind;
- ein Hierarchieerzeugungsmodul (220) zum Bestimmen eines Hierarchiezustands für die Vielzahl von aufgabenspezifischen Vorrichtungen (100) basierend auf der Roboterinformation; wobei die Roboterinformation die höchste Priorität für die Hierarchieerzeugung hat; und
- ein Aufgabenplanungsmodul (230) zum Erzeugen eines Reinigungsbetriebsplans basierend auf mindestens dem Hierarchiezustand, der der Vielzahl von aufgabenspezifischen Vorrichtungen (100) zugewiesen ist, und der bestimmten Reinigungsaufgabe, wobei der Reinigungsbetriebsplan mehrere Reinigungsbetriebsschichten umfasst, wobei jede Betriebsschicht eine Vielzahl von Betriebsprotokollen umfasst, die für mindestens eine aufgabenspezifische Vorrichtung (100) spezifiziert sind.

2. System nach Anspruch 1, wobei das Bereitstellen der erzeugten Passphrase für den Benutzer das Senden der erzeugten Passphrase an die aufgabenspezifische Vorrichtung (100) zum Abrufen durch den Benutzer umfasst.

3. System nach Anspruch 1, wobei das Bereitstellen der erzeugten Passphrase für den Benutzer eines der Folgenden umfasst:
Senden der erzeugten Passphrase an eine vom Benutzer registrierte E-Mail-Adresse des Benutzers;
Senden der erzeugten Passphrase an eine vom Benutzer registrierte Telefonnummer des Benutzers; und
Senden der erzeugten Passphrase an eine Benutzervorrichtung des Benutzers, von der der Authentifizierungsmanager die Roboterinformation empfängt.

4. System nach einem der Ansprüche 1 bis 3, wobei die Prozessoreinheit (200) ferner eine Datenclustereinheit (450) zum Verwalten des Zu- und Abflusses von Daten zwischen der Prozessoreinheit (200) und der Vielzahl von aufgabenspezifischen Vorrichtungen (100) umfasst.

5. System nach einem der Ansprüche 1 bis 4, wobei die Vielzahl von aufgabenspezifischen Vorrichtungen (100) eine oder mehrere Reinigungsvorrichtungen umfasst, wobei jede Reinigungsvorrichtung in der Lage ist, eine oder mehrere der folgenden Reinigungsaktionen durchzuführen: Kehren, Saugen, Schrubben, Wischen, Fensterreinigung, Tischreinigung, Müllsammlung, Anordnung von Möbeln zur Erleichterung der Reinigung.

6. System nach einem der Ansprüche 1 bis 5, wobei die Prozessoreinheit (200) mindestens einen Cloud-Server umfasst.

7. System nach einem der Ansprüche 1 bis 6, wobei das System konfiguriert ist, um Aktivitäten der Vielzahl von aufgabenspezifischen Vorrichtungen (100) und/oder des Benutzers zu verfolgen und aufzuzeichnen.

8. System nach einem der Ansprüche 1 bis 7, wobei das Aufgabenplanungsmodul (230) konfiguriert ist, um Zeitfaktor- und Zoneninformation zum Erzeugen des Reinigungsbetriebsplans zu berücksichtigen.

9. System nach einem der Ansprüche 1 bis 8, wobei das Hierarchieerzeugungsmodul (220) konfiguriert ist, um einen Rang für die Vielzahl von aufgabenspezifischen Vorrichtungen (100) in dem Hierarchiezustand zu bestimmen, wobei jede Vorrichtung (100) die Betriebsschicht basierend auf dem Rang bildet.

10. System nach einem der Ansprüche 1 bis 9, wobei die Vielzahl von Betriebsprotokollen Betriebsparameter wie ein Betriebszeitraum, ein Abdeckungsbereich und ein Roboternavigationspfad sind, denen die Vielzahl von aufgabenspezifischen Vorrichtungen (100) folgen sollen, wenn sie die bestimmte Reinigungsaufgabe durchführen.

11. System nach einem der Ansprüche 1 bis 10, wobei der Reinigungsbetriebsplan, der durch das Aufgabenplanungsmodul (230) erzeugt wird, an ein Aufgabenausführungsmodul (240) übertragen wird, um die bestimmte Reinigungsaufgabe auszuführen.

## Revendications

1. Un système pour la mise en œuvre d'une tâche désignée, comprenant :
une pluralité d'appareils spécifiques à une tâche (100), au moins l'un des appareils spécifiques à une tâche (100) étant configuré pour communiquer avec une unité de processeur (200) ; et
un dispositif utilisateur (49) configuré pour recevoir d'un utilisateur une ou plusieurs instructions et configuré pour communiquer avec l'unité de processeur (200),
dans lequel l'unité de processeur (200) comprend :
- un gestionnaire de contrôle (430) pour générer une commande de contrôle haut niveau sur la base des une ou plusieurs instructions reçues du dispositif utilisateur (49) ;
- un générateur d'action (440) pour générer une commande de contrôle spécifique à un dispositif pour chacun de la pluralité d'appareils spécifiques à une tâche (100) à partir de la commande de contrôle haut niveau, l'unité de processeur (200) étant configurée pour transmettre la commande de contrôle spécifique au dispositif à un appareil spécifique à une tâche (100) correspondant de la pluralité d'appareils spécifiques à une tâche (100) pour exécution ;
- un gestionnaire de d'authentification (410) configuré pour :
- recevoir d'un utilisateur une information de robot d'un appareil spécifique à une tâche (100) ;
- générer une phrase de passe sur la base de l'information de robot reçue ;
- délivrer à l'utilisateur la phrase de passe générée ;
- recevoir de l'utilisateur une phrase de passe produite par l'utilisateur ; et
- permettre à l'utilisateur de contrôler l'appareil spécifiques à une tâche (100) si la phrase de passe produite par l'utilisateur concorde avec la phrase de passe générée ; **caractérisé en ce que** :
- un corps de l'appareil spécifique à une tâche (100) comprend une étiquette imprimée avec un QR code ou un code à barres associés à l'information de robot, l'information de robot étant configurée pour être lue par le dispositif utilisateur (49) pour générer la phrase de passe, et dans lequel l'information de robot correspond à un ID de robot, à une information géographique, à un état de fonctionnement courant, à un état de consommation d'énergie courant, à des données de gestion de batterie, à des heures de fonctionnement, à un statut de santé, à un statut d'erreur, à des caractéristiques d'un environnement de travail, et à des informations de diagnostic de défaut ;
- la tâche désignée est une tâche de nettoyage et les appareils spécifiques à une tâche (100) sont des appareils de nettoyage (100) ;
- un module de génération de hiérarchie (220) pour déterminer un état hiérarchique pour la pluralité d'appareils spécifiques à une tâche (100) sur la base de l'information de robot, l'information de robot étant à la priorité la plus élevée pour la génération de hiérarchie ; et
- un module de planification de tâche (230) pour générer un plan d'opérations de nettoyage au moins sur la base de l'état hiérarchique attribué à la pluralité d'appareils spécifiques à une tâche (100) et de la tâche de nettoyage désignée, le plan d'opérations de nettoyage comprenant des couches multiples d'opérations de nettoyage, avec chaque couche d'opérations qui comprend une pluralité de protocoles opérationnels spécifiés pour au moins un appareil.

2. Le système selon la revendication 1, dans lequel la délivrance à l'utilisateur de la phrase de passe générée comprend l'envoi de la phrase de passe générée à l'appareil spécifique à une tâche (100) pour récupération par l'utilisateur.

3. Le système selon la revendication 1, dans lequel la délivrance à l'utilisateur de la phrase de passe comprend l'un parmi :
l'envoi de la phrase de passe générée à une adresse mail de l'utilisateur qui est enregistrée pour l'utilisateur ;
l'envoi de la phrase de passe générée à un numéro de téléphone de l'utilisateur qui est enregistré pour l'utilisateur ; et
l'envoi de la phrase de passe générée à un dispositif utilisateur de l'utilisateur à partir duquel le gestionnaire d'authentification reçoit l'information de robot.

4. Le système selon l'une des revendications 1 à 3, dans lequel l'unité de traitement (200) comprend en outre une unité de regroupement de données (450) pour gérer le flux entrant et le flux sortant de données entre l'unité de processeur (200) et la pluralité d'appareils spécifiques à une tâche (100).

5. Le système selon l'une des revendications 1 à 4, dans lequel la pluralité d'appareils spécifiques à une tâche (100) comprennent un ou plusieurs appareils de nettoyage, chaque appareil de nettoyage étant capable d'exécuter une ou plusieurs des actions de nettoyage suivantes : balayage, passage d'aspirateur, récurage, passage de serpillière, lavage de carreaux, nettoyage de table, ramassage des corbeilles, déplacement du mobilier pour faciliter le nettoyage.

6. Le système selon l'une des revendications 1 à 5, dans lequel l'unité de traitement (200) comprend au moins un serveur cloud.

7. Le système selon l'une des revendications 1 à 6, dans lequel le système est configuré pour suivre et enregistrer les activités de la pluralité d'appareils spécifiques à une tâche (100) et/ou de l'utilisateur.

8. Le système selon l'une des revendications 1 à 7, dans lequel le module de planification de tâche (230) est configuré pour considérer le facteur temps et une information de zone pour générer le plan d'opérations de nettoyage.

9. Le système selon l'une des revendications 1 à 8, dans lequel le module de génération de hiérarchie (220) est configuré pour déterminer un rang pour la pluralité d'appareils spécifiques à une tâche (100) dans l'état hiérarchique, chaque appareil (100) formant la couche d'opérations sur la base du rang.

10. Le système selon l'une des revendications 1 à 9, dans lequel la pluralité de protocoles opérationnels sont des paramètres d'opérations tels qu'une durée de temps d'opération, une zone de couverture, et un parcours de navigation de robot pour la pluralité d'appareils spécifiques à une tâche (100) qui doit être suivi lors de l'exécution de la tâche de nettoyage désignée.

11. Le système selon l'une des revendications 1 à 10, dans lequel le plan d'opérations de nettoyage généré par le module de planification de tâche (230) est transmis à un module d'exécution de tâche (240) pour exécuter la tâche de nettoyage désignée.
